(19) Europäisches Patentamt
European Patent Office
Office européen des brevets

(11) EP 3 375 849 A1

(12) EUROPEAN PATENT APPLICATION
published in accordance with Art. 153(4) EPC

(43) Date of publication:
**19.09.2018 Bulletin 2018/38**

(21) Application number: **16864143.9**

(22) Date of filing: **07.11.2016**

(51) Int Cl.:
*C10M 143/00* (2006.01) *C08F 255/04* (2006.01)
*C10M 143/04* (2006.01) *C10N 20/00* (2006.01)
*C10N 20/02* (2006.01) *C10N 20/04* (2006.01)
*C10N 30/00* (2006.01) *C10N 30/02* (2006.01)
*C10N 40/04* (2006.01) *C10N 40/25* (2006.01)
*C10N 40/26* (2006.01) *C10N 50/10* (2006.01)

(86) International application number:
**PCT/JP2016/082911**

(87) International publication number:
**WO 2017/082182 (18.05.2017 Gazette 2017/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **09.11.2015 JP 2015219321**

(71) Applicant: **Mitsui Chemicals, Inc.**
**Minato-ku**
**Tokyo 105-7122 (JP)**

(72) Inventors:
- **HAYAKAWA, Akio**
**Sodegaura-shi**
**Chiba 299-0265 (JP)**
- **YANAGIMOTO, Yasushi**
**Sodegaura-shi**
**Chiba 299-0265 (JP)**
- **YAMAMOTO, Atsushi**
**Sodegaura-shi**
**Chiba 299-0265 (JP)**
- **NAKAMURA, Tatsuya**
**Sodegaura-shi**
**Chiba 299-0265 (JP)**
- **MATSUGI, Tomoaki**
**Sodegaura-shi**
**Chiba 299-0265 (JP)**
- **OKADA, Keiji**
**Kuga-gun**
**Yamaguchi 740-0061 (JP)**

(74) Representative: **Hoffmann Eitle**
**Patent- und Rechtsanwälte PartmbB**
**Arabellastraße 30**
**81925 München (DE)**

# (54) VISCOSITY MODIFIER FOR LUBRICATING OILS, ADDITIVE COMPOSITION FOR LUBRICATING OILS, AND LUBRICATING OIL COMPOSITIONS

(57) [Problems]

An object of the present invention is to provide a viscosity modifier for lubricating oils and an additive composition for lubricating oils, for obtaining a lubricating oil composition excellent in storage stability under low temperature conditions as well as in viscosity characteristics at a low temperature.

[Solution to Problems]

The viscosity modifier for lubricating oils according to the present invention contains a resin ($\alpha$), wherein the resin ($\alpha$) satisfies specific requirements, and contains a grafted olefin polymer [R1] which is composed of a main chain and a side chain(s) and which satisfies the following requirements (i) and (ii). (i) The main chain is composed of a copolymer of ethylene and at least one $\alpha$-olefin selected from $\alpha$-olefins having from 3 to 12 carbon atoms, and contains the structural units derived from ethylene within the range of from 74 to 86 mol%. (ii) The side chain(s) is/are composed of a copolymer of ethylene and at least one $\alpha$-olefin selected from $\alpha$-olefins having from 3 to 12 carbon atoms, and contain(s) the structural units derived from ethylene within the range of from 30 to 65 mol%.

EP 3 375 849 A1

## Description

### TECHNICAL FIELD

The present invention relates to a viscosity modifier for lubricating oils which satisfies specific requirements, as well as an additive composition for lubricating oils and a lubricating oil composition obtainable therefrom.

### BACKGROUND ART

Petroleum products generally have a so-called temperature dependence of viscosity; in other words, they show a large variation in viscosity depending on the temperature. Lubricating oil compositions for use in automobiles and the like, for example, preferably have a low temperature dependence of viscosity. Therefore, in order to reduce the temperature dependence of viscosity, a certain kind of polymer which is soluble in a lubricating oil base is used in a lubricating oil as a viscosity modifier.

Ethylene/α-olefin copolymers have been widely used as such a viscosity modifier for lubricating oils, and modified in various ways to further improve the balance between the properties of lubricating oils (see Patent Document 1, for example).

With growing concerns for decreasing petroleum reserves and environmental problems such as global warming in recent years, improvements in automobile fuel efficiency are demanded in order to reduce exhaust gas pollutants and $CO_2$ emissions. Fuel saving by improving lubricating oils has been expected as an important technique for saving fuel, because of its superiority in cost-effectiveness as compared to improving the physical structure of lubricating devices, and demands for improvements in fuel efficiency by lubricating oils are increasing.

Power loss in engines and transmissions can be categorized into two types: friction loss at sliding portions; and agitation loss due to the viscosity of lubricating oils. In particular, one of the measures for saving fuel by engine oils is to reduce the viscous resistance of engine oils. As is evident from the fact that measurements under relatively low temperature conditions have been added to the fuel consumption test, in recent years, in addition to the measurements under high temperature conditions which have been conventionally performed, reducing the viscous resistance at a low temperature is effective for improving the fuel efficiency.

To reduce the viscous resistance of engine oils, it is effective to reduce their viscosity. Reducing the viscosity is effective for reducing both the friction loss and agitation loss, particularly at a low temperature.

In order to reduce the viscosity at a low temperature, the use of a polymer as disclosed in Patent Document 1 is known. The polymer disclosed in Patent Document 1 dissolves in a base oil at a high temperature to favorably increase its viscosity; on the other hand, the solubility of the polymer in the oil decreases at a low temperature, thereby reducing the effect on the effective volume (flow rate) and the viscosity of the oil.

The viscosity modifier disclosed in Patent Document 1 enables to reduce the low temperature viscosity of a lubricating oil composition containing the viscosity modifier, and thus contributes, to a certain extent, in improving the fuel efficiency under conditions where the internal temperature of an engine is low (for example, at the time of start-up of the engine) . However, with increasing demands for fuel saving, a further decrease in the low temperature viscosity is needed.

To improve the low temperature properties of a lubricating oil composition in a balanced manner, a method is known in which an ethylene/propylene copolymer having a high ethylene content is used as a viscosity modifier (see Patent Document 2, for example). However, although an increase in the ethylene content improves the low temperature properties, it causes the crystallization of ethylene chains of the viscosity modifier at a low temperature, possibly resulting in a reduced storage stability of the lubricating oil composition under low temperature conditions. In view of the above situation, a viscosity modifier for lubricating oils is needed, which allows for obtaining a lubricating oil composition excellent in storage stability under low temperature conditions as well as in viscosity characteristics at a low temperature.

To improve the low temperature storage stability and the low temperature properties of a lubricating oil composition, a method is known in which a blend of ethylene/α-olefin copolymers varying in the amount of structural units derived from ethylene is used as a viscosity modifier for lubricating oils (see Patent Document 3, for example). Alternatively, a method is known in which an olefin block copolymer including ethylene/α-olefin polymer blocks varying in the amount of structural units derived from ethylene is used as a viscosity modifier for lubricating oils (see Patent Document 4, for example).

### RELATED ART DOCUMENTS

### PATENT DOCUMENTS

Patent Document 1: WO 2000/060032
Patent Document 2: WO 2000/034420
Patent Document 3: JP 2003-105365 A
Patent Document 4: WO 2008/047878

SUMMARY OF THE INVENTION

PROBLEMS TO BE SOLVED BY THE INVENTION

However, in a lubricating oil composition including a conventional viscosity modifier for lubricating oils, the balance between the storage stability under low temperature conditions and the low temperature properties has been insufficient.

An object of the present invention is to provide a viscosity modifier for lubricating oils and an additive composition for lubricating oils, for obtaining a lubricating oil composition excellent in storage stability under low temperature conditions as well as in viscosity characteristics at a low temperature.

MEANS FOR SOLVING THE PROBLEMS

The present inventors have found out, as a result of intensive studies, that the above described problems can be solved by using a viscosity modifier for lubricating oils which satisfies specific requirements in an additive composition for lubricating oils. In other words, the present invention relates to the following [1] to [16].

[1] A viscosity modifier for lubricating oils, comprising a resin ($\alpha$),
wherein the resin ($\alpha$) satisfies the following requirements (I) and (II), and comprises a grafted olefin polymer [R1] which is composed of a main chain and a side chain(s) and which satisfies the following requirements (i) and (ii):

(i) the main chain is composed of a copolymer of ethylene and at least one $\alpha$-olefin selected from $\alpha$-olefins having from 3 to 12 carbon atoms, and comprises structural units derived from the ethylene within the range of from 74 to 86 mol%; and
(ii) the side chain(s) is/are composed of a copolymer of ethylene and at least one $\alpha$-olefin selected from $\alpha$-olefins having from 3 to 12 carbon atoms, and comprise(s) the structural units derived from ethylene within the range of from 30 to 65 mol%;

(I) the melting point (Tm) as measured by differential scanning calorimetry (DSC) is within the range of from -20 to 100°C; and
(II) the intrinsic viscosity [$\eta$] as measured in decalin at 135°C is within the range of from 0.5 to 2.5 dl/g.

[2] The viscosity modifier for lubricating oils according to [1], wherein the resin ($\alpha$) further satisfies the following requirement (III):

(III) the ratio of the structural units derived from ethylene with respect to the total structural units is within the range of from 40 to 85 mol%, and the ratio of structural units derived from the $\alpha$-olefin having from 3 to 12 carbon atoms with respect to the total structural units is within the range of from 15 to 60 mol% (with the proviso that the total amount of the structural units derived from ethylene and the structural units derived from the $\alpha$-olefin having from 3 to 12 carbon atoms is taken as 100 mol%).

[3] The viscosity modifier for lubricating oils according to [1] or [2], wherein the resin ($\alpha$) is composed of the structural units derived from ethylene and structural units derived from propylene.
[4] The viscosity modifier for lubricating oils according to any one of [1] to [3], wherein the resin ($\alpha$) has a density as measured by the density-gradient tube method in accordance with JIS K7112 within the range of from 850 to 880 kg/$m^3$.
[5] The viscosity modifier for lubricating oils according to any one of [1] to [4], wherein the grafted olefin polymer [R1] further satisfies the following requirement (iii):

(iii) the main chain is derived from an ethylene/$\alpha$-olefin copolymer having a weight average molecular weight within the range of from 70,000 to 400,000.

[6] The viscosity modifier for lubricating oils according to any one of [1] to [5], wherein the grafted olefin polymer

[R1] further satisfies the following requirement (iv):

(iv) the side chain(s) is/are derived from an ethylene/α-olefin copolymer having a weight average molecular weight (Mw) within the range of from 1,000 to 70,000.

[7] A method for producing the viscosity modifier for lubricating oils according to any one of [1] to [6], the method comprising the following steps (A) and (B):

(A) copolymerizing ethylene and at least one α-olefin selected from α-olefins having from 3 to 12 carbon atoms in the presence of an olefin polymerization catalyst comprising a transition metal compound [A] of a transition metal of Group 4 in the periodic table, to produce an ethylene/α-olefin copolymer having terminal unsaturation; and

(B) copolymerizing the ethylene/α-olefin copolymer having terminal unsaturation produced in the step (A), ethylene, and at least one α-olefin selected from α-olefins having from 3 to 12 carbon atoms in the presence of an olefin polymerization catalyst comprising a transition metal compound [B] of a transition metal of Group 4 in the periodic table, to produce the resin (α).

[8] The method for producing the viscosity modifier for lubricating oils, according to [7], wherein the ethylene/α-olefin copolymer having terminal unsaturation produced in the step (A) comprises the structural units derived from ethylene within the range of from 30 to 65 mol%, and has a weight average molecular weight (Mw) as measured by gel permeation chromatography within the range of from 1,000 to 70,000.

[9] The method for producing the viscosity modifier for lubricating oils, according to [7] or [8], wherein the transition metal compound [A] of a transition metal of Group 4 in the periodic table is a transition metal compound of a transition metal of Group 4 in the periodic table, the compound comprising a ligand having a dimethylsilylbisindenyl skeleton.

[10] The method for producing the viscosity modifier for lubricating oils, according to any one of [7] to [9], wherein the transition metal compound [B] of a transition metal of Group 4 in the periodic table is a bridged metallocene compound represented by the following general formula [B]:

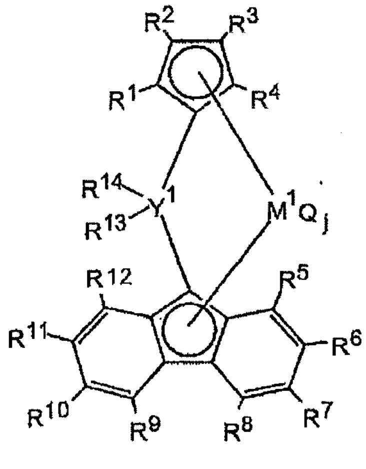

· · · [B]

(wherein in the formula [B],

$R^1$, $R^2$, $R^3$, $R^4$, $R^5$, $R^8$, $R^9$ and $R^{12}$ each independently represents a hydrogen atom, a hydrocarbon group, a silicon-containing group, or a hetero atom-containing group other than silicon-containing groups, and two mutually adjacent groups of the groups represented by $R^1$ to $R^4$ are optionally bound together to form a ring;

$R^6$ and $R^{11}$ are the same atom or the same group selected from hydrogen atom, hydrocarbon groups, silicon-containing groups, and hetero atom-containing groups other than the silicon-containing groups; $R^7$ and $R^{10}$ are the same atom or the same group selected from hydrogen atom, hydrocarbon groups, silicon-containing groups, and hetero atom-containing groups other than the silicon-containing groups; $R^6$ and $R^7$ are optionally bound together to form a ring; and $R^{10}$ and $R^{11}$ are optionally bound together to form a ring; with the proviso that all of $R^6$, $R^7$, $R^{10}$ and $R^{11}$ are not hydrogen atoms;

$R^{13}$ and $R^{14}$ each independently represents an aryl group;

$Y^1$ represents a carbon atom or a silicon atom;

$M^1$ represents a zirconium atom or a hafnium atom;

Q represents a halogen atom, a hydrocarbon group, a halogenated hydrocarbon group, a neutral conjugated or non-conjugated diene having from 4 to 10 carbon atoms, an anionic ligand, or a neutral ligand capable of being coordinated with a lone pair of electrons;
j represents an integer of from 1 to 4; and
in cases where j is an integer of two or more, a plurality of Qs may be the same as or different from each other).

[11] The method for producing the viscosity modifier for lubricating oils, according to any one of [7] to [10], wherein the step (B) is a solution polymerization process carried out at a polymerization temperature of 90°C or more.
[12] An additive composition for lubricating oils, comprising from 1 to 50 parts by mass of the viscosity modifier for lubricating oils according to any one of [1] to [6], and from 50 to 99 parts by mass of an oil (B) (with the proviso that the total amount of the viscosity modifier for lubricating oils and the oil (B) is taken as 100 parts by mass).
[13] A lubricating oil composition comprising from 0.1 to 5 parts by mass of the viscosity modifier for lubricating oils according to any one of [1] to [6], and from 95 to 99.9 parts by mass of a lubricating oil base (BB) (with the proviso that the total amount of the viscosity modifier for lubricating oils and the lubricating oil base (BB) is taken as 100 parts by mass).
[14] The lubricating oil composition according to [13], further comprising from 0.05 to 5% by mass of a pour point depressant (C) in 100% by mass of the lubricating oil composition.
[15] The lubricating oil composition according to [13] or [14], wherein the lubricating oil base (BB) is a mineral oil.
[16] The lubricating oil composition according to [13] or [14], wherein the lubricating oil base (BB) is a synthetic oil.

EFFECT OF THE INVENTION

By using the viscosity modifier for lubricating oils according to the present invention, it is possible to provide a lubricating oil composition excellent in storage stability under low temperature conditions as well as in viscosity characteristics at a low temperature. Alternatively, it is possible to provide an additive composition for lubricating oils, capable of providing the lubricating oil composition.

BRIEF DESCRIPTION OF THE DRAWINGS

FIG. 1 shows a diagram obtained by plotting the CCS viscosity (at -30°C) against the degree of phase separation, of mineral oil-containing lubricating oils prepared in Examples and Comparative Examples.
FIG. 2 shows a diagram obtained by plotting the MR viscosity (at -40°C) against the degree of phase separation, of synthetic oil-containing lubricating oils prepared in Examples and Comparative Examples.

MODE FOR CARRYING OUT THE INVENTION

The present invention will now be specifically described. Note that, in the following descriptions, the expression "from * to *" used to describe a numerical range refers to a range of "* or more and * or less", unless otherwise defined.

< Viscosity Modifier for Lubricating Oils >

The viscosity modifier for lubricating oils according to the present invention contains a resin ($\alpha$), and the resin ($\alpha$) contains a grafted olefin polymer [R1]. The respective components will be described in detail below.

< Grafted Olefin Polymer [R1] >

The resin ($\alpha$) contained in the viscosity modifier for lubricating oils according to the present invention contains a grafted olefin polymer [R1] composed of a main chain and a side chain(s), and satisfies the requirements (I) and (II).
The resin ($\alpha$) is an ethylene/$\alpha$-olefin copolymer which can be obtained through a copolymerization step (A) and a copolymerization step (B) according to a production method to be described later. Since a portion of an ethylene/$\alpha$-olefin copolymer having terminal unsaturation obtained in the step (A) contributes to the copolymerization in the step (B), the resin ($\alpha$) may contain, in addition to the grafted olefin polymer [R1], the ethylene/$\alpha$-olefin copolymer having terminal unsaturation which did not contribute to the production of the grafted polymer. In other words, the resin ($\alpha$) is substantially a mixture of the grafted polymer and a linear polymer (the polymer produced in the step (A) which did not contribute to the production of the grafted polymer and thus did not constitute the side chain(s)). The content of the grafted olefin polymer [R1] in the resin ($\alpha$) is usually 10% by mass or more, preferably 20% by mass or more, and more

preferably 40% by mass or more. The content of the grafted olefin polymer [R1] in the resin (α) can be determined, for example, by obtaining a molecular weight distribution curve by GPC measurement, and performing a peak separation in the curve according to the method described in the section of Examples.

In the present invention, the term "graft (co)polymer" or "grafted polymer" refers to a polymer in which one or more side chains are bound to a main chain.

Since the grafted olefin polymer [R1] has a structure in which one or more side chains composed of a non-crystalline ethylene/α-olefin copolymer are chemically bound to a main chain composed of a crystalline ethylene/α-olefin copolymer, the resin (α) containing the grafted olefin polymer [R1] shows characteristics that it is less prone to precipitation from a lubricating oil composition including the resin and to gelation under low temperature conditions, as compared to an ethylene/α-olefin copolymer having a linear structure. Accordingly, a lubricating oil composition obtained using the viscosity modifier for lubricating oils which contains the resin (α) has an excellent storage stability under low temperature conditions.

The reason that an effect of improving the storage stability under low temperature conditions can be obtained is considered as follows. When the lubricating oil composition is placed at a low temperature, it is considered that the viscosity modifier for lubricating oils may be aggregated to form aggregates. At this time, the fact that the molecular chains of the grafted olefin polymer [R1] have a branched structure is probably responsible for providing an effect of reducing the occurrence of gelation due to crystallization between the aggregates, and the precipitation from the lubricating oil composition. In other words, the above described branched structure is thought to be responsible for improving the storage stability under low temperature conditions.

In particular, the effect of improving the storage stability under low temperature conditions is pronounced in cases where a mineral oil is used as a lubricating oil base (BB) to be described later. The inventors consider that the reason for this to be as follows. As will be described later, a mineral oil usually contains from 0.5 to 10% by mass of a wax component. While the wax component exhibits crystallinity, it is thought that the effect of the resin (α) to inhibit the crystallization of the wax component serves to improve the storage stability under low temperature conditions.

On the other hand, in cases where a synthetic oil is used as the lubricating oil base (BB) to be described later, the effect of improving the storage stability under low temperature conditions is not as pronounced as in the case of using a mineral oil. This is considered to be due to the fact that the synthetic oil does not contain any wax component.

The present inventors assume that the absence of side chains, too short a length of side chains, or too small a number of side chains in the branched structure of the ethylene/α-olefin copolymer causes crystallization or inhibits the action of a pour point depressant, as a result of which the resulting lubricating oil composition has poor storage stability under low temperature conditions.

On the other hand, the inventors assume that too long a length of side chains or too large a number of side chains results in poor shear stability or poor viscosity characteristics at a low temperature, possibly making the resulting polymer unsuitable as a viscosity modifier for lubricating oils.

The grafted olefin polymer [R1] is a graft copolymer having a main chain and one or more side chains, as described above. In the present invention, the main chain and the side chain(s) of the grafted olefin polymer [R1] satisfy the following requirements (i) and (ii), and preferably, further satisfy one or more of the following requirements (iii) and (iv).

(i) The main chain is composed of structural units derived from ethylene and structural units derived from at least one α-olefin selected from α-olefins having from 3 to 12 carbon atoms, and contains the structural units derived from ethylene within the range of from 74 to 86 mol% with respect to the total structural units contained in the main chain. In other words, the main chain is composed of a copolymer of ethylene and at least one α-olefin selected from α-olefins having from 3 to 12 carbon atoms, and contains structural units derived from the ethylene within the range of from 74 to 86 mol%.

(ii) The side chain(s) is/are composed of structural units derived from ethylene and structural units derived from at least one α-olefin selected from α-olefins having from 3 to 12 carbon atoms, and composed of an ethylene/α-olefin copolymer containing the structural units derived from ethylene within the range of from 30 to 65 mol%. In other words, the side chain(s) is/are composed of a copolymer of ethylene and at least one α-olefin selected from α-olefins having from 3 to 12 carbon atoms, and contain(s) the structural units derived from ethylene within the range of from 30 to 65 mol%.

(iii) The main chain is derived from an ethylene/α-olefin copolymer having a weight average molecular weight of from 70,000 to 400,000.

(iv) The side chain(s) is/are derived from an ethylene/α-olefin copolymer having a weight average molecular weight of from 1,000 to 70,000.

These requirements (i) to (iv) will now be specifically described.

[Requirement (i)]

The main chain of the grafted olefin polymer [R1] is composed of an ethylene/α-olefin copolymer, and it serves as a moiety responsible for providing shear stability and low temperature properties required for the lubricating oil composition, in the grafted olefin polymer [R1]. In order to secure such properties, the main chain of the grafted olefin polymer [R1] is composed of structural units derived from ethylene and structural units derived from at least one α-olefin selected from α-olefins having from 3 to 12 carbon atoms.

Specific examples and preferred examples of the α-olefin having from 3 to 12 carbon atoms, copolymerized with ethylene in the ethylene/α-olefin copolymer, include propylene, 1-butene, 2-methyl-1-propene, 2-methyl-1-butene, 3-methyl-1-butene, 1-hexene, 2-ethyl-1-butene, 2,3-dimethyl-1-butene, 2-methyl-1-pentene, 3-methyl-1-pentene, 4-methyl-1-pentene, 3,3-dimethyl-1-butene, 1-heptene, methyl-1-hexene, dimethyl-1-pentene, ethyl-1-pentene, trimethyl-1-butene, methylethyl-1-butene, 1-octene, methyl-1-pentene, ethyl-1-hexene, dimethyl-1-hexene, propyl-1-heptene, methylethyl-1-heptene, trimethyl-1-pentene, propyl-1-pentene, diethyl-1-butene, 1-nonene, 1-decene, 1-undecene, 1-dodecene, and the like.

More preferred is an α-olefin having from 3 to 10 carbon atoms, and still more preferred is an α-olefin having from 3 to 8 carbon atoms. Specific examples thereof include: linear olefins such as propylene, 1-butene, 1-pentene, 1-hexene, 1-octene, and 1-decene; and branched olefins such as 4-methyl-1-pentene, 3-methyl-1-pentene, and 3-methyl-1-butene. Among these, preferred is propylene, 1-butene, 1-pentene, 1-hexene, or 1-octene, and still more preferred is propylene.

The above described α-olefins can be used alone, or a plurality of these α-olefins can be used in combination.

The ratio of the structural units derived from ethylene in the main chain of the grafted olefin polymer [R1] is preferably within the range of from 74 to 86 mol%, and more preferably from 76 to 85 mol%, with respect to the total structural units contained in the main chain. Further, the ratio of the structural units derived from the α-olefin is preferably within the range of from 14 to 26 mol%, and more preferably from 15 to 24 mol%, with respect to the total structural units contained in the main chain.

The relationship between the ratio of the structural units derived from ethylene and the structural units derived from the α-olefin, and the melting point (Tm), varies depending on the type of the α-olefin used. However, it is preferred that the ratio of the structural units derived from ethylene and the structural units derived from the α-olefin contained in the main chain of the grafted olefin polymer [R1] be within the above mentioned range, in order to achieve the melting point (Tm) within the range described in the requirement (I) to be described later.

When the ratio of the structural units derived from ethylene and the structural units derived from the α-olefin contained in the main chain is within the above range, the main chain exhibits crystallinity and has a melting point. In other words, the resin (α) exhibits crystallinity, and in the lubricating oil composition at a low temperature, the resin (α) forms aggregates in a specific amount of an oil (B), thereby reducing the flow rate (effective volume). As a result, the lubricating oil composition obtained using the viscosity modifier for lubricating oils, which contains the resin (α), exhibits excellent viscosity characteristics at a low temperature.

The molar ratio of the structural units derived from ethylene and structural units derived from the α-olefin contained in the main chain can be adjusted by controlling the ratio of the concentrations of ethylene and the α-olefin to be present in the polymerization reaction system in the step of producing the main chain. According to the method for producing the viscosity modifier for lubricating oils, to be described later, it is possible to adjust the molar ratio within the above range by controlling the ratio of the concentrations of ethylene and the α-olefin to be present in the polymerization reaction system in the step (B).

The molar ratio (mol%) of the structural units derived from the α-olefin contained in the main chain, namely, the α-olefin composition in the main chain, can be obtained, for example: by obtaining, in a conventional manner, the α-olefin composition in an ethylene/α-olefin copolymer obtained under conditions where the ethylene/α-olefin copolymer having terminal unsaturation produced in the step (A) to be described later is not contained; or by deducting the influence of the ethylene/α-olefin copolymer having terminal unsaturation or the side chains from the α-olefin composition of the resin (α).

[Requirement (ii)]

The side chain(s) of the grafted olefin polymer [R1] is/are composed of structural units derived from ethylene and structural units derived from at least one α-olefin selected from α-olefins having from 3 to 12 carbon atoms, and composed of an ethylene/α-olefin copolymer containing the structural units derived from ethylene preferably within the range of from 30 to 65 mol%. The side chain(s) more preferably contain(s) the structural units derived from ethylene within the range of from 35 to 60 mol%. Further, the ratio of the structural units derived from the α-olefin is within the range of from 35 to 70 mol%, and preferably from 40 to 65 mol%, with respect to the total structural units contained in the side chain(s).

Specific examples and preferred examples of the α-olefin having from 3 to 12 carbon atoms are the same as those described in the section of the requirement (i).

When the one or more side chains of the grafted olefin polymer [R1] have the above mentioned characteristics, the side chains tend to have non-crystalline properties, and the grafted olefin polymer [R1] will have a structure in which the side chains having non-crystalline properties are chemically bound to the crystalline main chain. This allows for reducing the crystallinity of the resulting lubricating oil composition, and thus provides the effect of reducing the occurrence of precipitation from the lubricating oil composition and gelation under low temperature conditions. As a result, the resulting lubricating oil composition has an excellent storage stability under low temperature conditions.

According to the method for producing the viscosity modifier for lubricating oils to be described later, the side chains of the grafted olefin polymer [R1] are derived from the ethylene/α-olefin copolymer having terminal unsaturation to be produced in the step (A). In other words, the composition of the ethylene/α-olefin copolymer having terminal unsaturation to be produced in the step (A) corresponds to the composition of the side chains of the grafted olefin polymer [R1]. Therefore, it is possible to obtain the ratio of the structural units derived from ethylene in the side chains by analyzing the composition of the ethylene/α-olefin copolymer having terminal unsaturation to be produced in the step (A). Further, the ratio of the respective structural units in the side chains can be adjusted within the above range, by controlling the ratio of the concentrations of ethylene and the α-olefin to be present in the polymerization reaction system in the step (A).

[Requirement (iii)]

The weight average molecular weight of the ethylene/α-olefin copolymer constituting the main chain of the grafted olefin polymer [R1] is within the range of from 70,000 to 400,000. The weight average molecular weight is preferably within the range of from 80,000 to 300,000, and more preferably from 90,000 to 250,000. The weight average molecular weight described above corresponds to a weight average molecular weight in terms of polystyrene, as determined by gel permeation chromatography (GPC).

The α-olefin in the ethylene/α-olefin copolymer corresponds to the α-olefin having from 3 to 12 carbon atoms described above in the requirement (i).

When the weight average molecular weight of the ethylene/α-olefin copolymer constituting the main chain of the grafted olefin polymer [R1] is equal to or lower than the above described upper limit value, the shear stability of the resulting lubricating oil composition according to the present invention tends to improve. When the weight average molecular weight is equal to or higher than the above described lower limit value, on the other hand, the viscosity characteristics at a low temperature of the resulting lubricating oil composition tends to improve.

According to the method for producing the viscosity modifier for lubricating oils, to be described later, the weight average molecular weight of the ethylene/α-olefin copolymer constituting the main chain of the grafted olefin polymer [R1] can be adjusted by supplying hydrogen into the polymerization system in the step (B). Alternatively, the weight average molecular weight can be adjusted by controlling the concentration of ethylene in the polymerization system. The concentration of ethylene can be controlled, for example, by adjusting the partial pressure of ethylene or adjusting the polymerization temperature.

The weight average molecular weight of the ethylene/α-olefin copolymer constituting the main chain can be obtained, for example: by analyzing the ethylene/α-olefin copolymer produced under conditions where the ethylene/α-olefin copolymer having terminal unsaturation produced in the step (A) to be described later is not contained; or by analyzing the resin (α) and deducting the influence of the ethylene/α-olefin copolymer having terminal unsaturation or the side chains from the analyzed result.

[Requirement (iv)]

The side chain(s) is/are derived from an ethylene/α-olefin copolymer having a weight average molecular weight within the range of from 1,000 to 70,000. The weight average molecular weight is preferably within the range of from 2,000 to 50,000, more preferably from 3,000 to 40,000, and particularly preferably from 4,000 to 20,000.

The α-olefin in the ethylene/α-olefin copolymer corresponds to the α-olefin having from 3 to 12 carbon atoms described above in the requirement (ii).

When the weight average molecular weight of the ethylene/α-olefin copolymer constituting the one or more side chains of the grafted olefin polymer [R1] is equal to or lower than the above described upper limit value, the shear stability and the viscosity characteristics at a low temperature of the resulting lubricating oil composition according to the present invention tend to improve. When the weight average molecular weight is equal to or higher than the above described lower limit value, on the other hand, the storage stability under low temperature conditions of the resulting lubricating oil composition tends to improve.

According to the method for producing the viscosity modifier for lubricating oils, to be described later, the weight average molecular weight of the ethylene/α-olefin copolymer constituting the side chains can be determined, by measuring the weight average molecular weight of the ethylene/α-olefin copolymer having terminal unsaturation produced in the step (A) by a conventional method, in the same manner as described in the "Requirement (iii) " above. For example, the weight average molecular weight in terms of polystyrene of the ethylene/α-olefin copolymer having terminal unsaturation, as determined by gel permeation chromatography (GPC), can be used as the weight average molecular weight of the ethylene/α-olefin copolymer constituting the side chains.

The weight average molecular weight of the ethylene/α-olefin copolymer constituting the side chains can be adjusted, for example, by controlling the polymerization temperature or the polymerization pressure, or by supplying hydrogen to the polymerization system.

In general, it is preferred that the main chain be contained in an amount within the range of from 10.0 to 99.9% by mass in the grafted olefin polymer [R1]. It is more preferred that the main chain be contained in an amount within the range of from 15.0 to 99.9% by mass, and still more preferably from 20.0 to 99.9% by mass in the grafted olefin polymer [R1]. The above described ratio of the main chain in the grafted olefin polymer [R1] can be evaluated, for example, by the method described in Examples.

The ratio of the main chain in the grafted olefin polymer [R1] can be adjusted, for example, by adjusting the amount to be supplied of the ethylene/α-olefin copolymer having terminal unsaturation produced in the step (A), which is used in the polymerization step (B).

Next, a description will be given regarding the requirements (I) and (II) to be satisfied by the resin (α), as well as further requirements to be preferably satisfied by the resin (α). In other words, it is preferred that the resin (α) to be used in the viscosity modifier for lubricating oils according to the present invention further satisfy at least one of the requirements (III), (IV) and (V), in addition to the above described requirements (I) and (II) .

[Requirement (I)]

The melting point (Tm) as measured by differential scanning calorimetry (DSC) is within the range of from -20 to 100°C. The melting point is preferably within the range of from -10 to 80°C, and more preferably from 0 to 60°C. When the melting point is equal to or lower than the above described upper limit value, an excellent storage stability under low temperature conditions can be obtained. When the melting point is equal to or higher than the above described lower limit value, on the other hand, excellent viscosity characteristics at a low temperature can be obtained.

Although the melting point (Tm) can be adjusted by various types of factors, it is primarily adjusted by the composition of the structural units in the resin (α). Specifically, an increase in the content ratio of the structural units derived from ethylene tends to result in a higher melting point (Tm), and a decrease in the content ratio thereof tends to result in a lower melting point (Tm). Particularly, in the case of using the method for producing the viscosity modifier for lubricating oils, to be described later, an increase in the content ratio of the structural units derived from ethylene in the step (B) tends to result in a higher melting point (Tm). In other words, the melting point can be adjusted within the above range, by controlling the ratio of the concentrations of ethylene and the α-olefin to be present in the polymerization reaction system in the step (B). The method for measuring the melting point (Tm) of the resin (α) by differential scanning calorimetry (DSC) will be described in detail in the section of Examples.

[Requirement (II)]

The intrinsic viscosity [η] as measured in decalin at 135°C is within the range of from 0.5 to 2.5 dl/g. The intrinsic viscosity is preferably within the range of from 0.55 to 2.0 dl/g, and more preferably from 0.6 to 1.8 dl/g. When the intrinsic viscosity is within the above range, an excellent shear stability can be obtained.

The intrinsic viscosity [η] can be adjusted within the above described range, by controlling the polymerization temperature, the amount of an agent for controlling the molecular weight such as hydrogen, and the like, during the polymerization of the resin (α).

[Requirement (III)]

The ratio of the structural units derived from ethylene with respect to the total structural units is within the range of from 40 to 85 mol%, and the ratio of structural units derived from the α-olefin having from 3 to 12 carbon atoms with respect to the total structural units is within the range of from 15 to 60 mol% (with the proviso that the total amount of the structural units derived from ethylene and the structural units derived from the α-olefin having from 3 to 12 carbon atoms is taken as 100 mol%) . The ratio of the structural units derived from ethylene is more preferably within the range of from 45 to 85 mol%, and particularly preferably from 50 to 85 mol%; whereas the ratio of the structural units derived from the α-olefin having from 3 to 12 carbon atoms is more preferably within the range of from 15 to 55 mol%, and particularly preferably from 15 to 50 mol%.

When the ratio of the structural units derived from ethylene is equal to or lower than the above described upper

limit value, an excellent storage stability under low temperature conditions can be obtained; whereas when the ratio is equal to or higher than the above described lower limit value, excellent viscosity characteristics at a low temperature can be obtained. When the ratio of the structural units derived from the α-olefin having from 3 to 12 carbon atoms is equal to or lower than the above described upper limit value, excellent viscosity characteristics at a low temperature can be obtained; whereas when the ratio is equal to or higher than the above described lower limit value, an excellent storage stability under low temperature conditions can be obtained. It is possible to adjust the molar ratio of the structural units derived from ethylene and the structural units derived from at least one α-olefin selected from α-olefins having from 3 to 12 carbon atoms within the above range, by adjusting the ratio of monomers as raw materials.

α-olefins having from 3 to 12 carbon atoms can be used singly, or a plurality of these α-olefins can be used in combination.

Specific examples of α-olefins having from 3 to 12 carbon atoms include propylene, 1-butene, 2-methyl-1-propene, 2-methyl-1-butene, 3-methyl-1-butene, 1-hexene, 2-ethyl-1-butene, 2,3-dimethyl-1-butene, 2-methyl-1-pentene, 3-methyl-1-pentene, 4-methyl-1-pentene, 3,3-dimethyl-1-butene, 1-heptene, methyl-1-hexene, dimethyl-1-pentene, ethyl-1-pentene, trimethyl-1-butene, methylethyl-1-butene, 1-octene, methyl-1-pentene, ethyl-1-hexene, dimethyl-1-hexene, propyl-1-heptene, methylethyl-1-heptene, trimethyl-1-pentene, propyl-1-pentene, diethyl-1-butene, 1-nonene, 1-decene, 1-undecene, 1-dodecene, and the like.

More preferred is an α-olefin having from 3 to 10 carbon atoms, and still more preferred is an α-olefin having from 3 to 8 carbon atoms. Specific examples thereof include linear olefins such as propylene, 1-butene, 1-pentene, 1-hexene, 1-octene, and 1-decene; and branched olefins such as 4-methyl-1-pentene, 3-methyl-1-pentene, and 3-methyl-1-butene. Among these, preferred is propylene, 1-butene, 1-pentene, 1-hexene, or 1-octene, and still more preferred is propylene. The use of propylene is preferred in terms of improving the shear stability. In other words, the resin (α) is most preferably composed of structural units derived from ethylene and structural units derived from propylene.

The lubricating oil composition including the viscosity modifier for lubricating oils which contains the resin (α) is superior in storage stability under low temperature conditions as well as in viscosity characteristics at a low temperature, as compared to a conventional lubricating oil composition.

The structural units derived from ethylene in the resin (α) can be measured by $^{13}$C-NMR, in accordance with the method described in "Polymer Analysis Handbook" (edited by Polymer Analysis Research Conference in Japan Society for Analytical Chemistry, published by Kinokuniya Co., Ltd., issued on January 12, 1995).

The viscosity modifier for lubricating oils may contain any of resins other than the resin (α), additives, and the like, to the extent that the effect of the present invention is not impaired. The ratio of the resin (α) with respect to the total amount of the viscosity modifier for lubricating oils is preferably 30% by mass or more, more preferably 50% by mass or more, still more preferably 80% by mass or more, and particularly preferably 90% by mass or more. Examples of components other than the resin (α) which can be contained in the viscosity modifier for lubricating oils include known viscosity modifiers for lubricating oils, resins used therein, and various types of additives such as antioxidants as will be exemplified in the section of the lubricating oil composition to be described later.

[Requirement (IV)]

The weight average molecular weight (Mw) as measured by gel permeation chromatography (GPC) is within the range of from 70,000 to 400,000. The weight average molecular weight is more preferably within the range of from 80,000 to 300,000, and still more preferably from 100,000 to 250,000. As described above, the term "weight average molecular weight" in the present invention refers to a weight average molecular weight in terms of polystyrene, as measured by GPC. The method of measuring the weight average molecular weight by GPC will be described in the section of Examples.

The weight average molecular weight (Mw) can be adjusted within the above described range, by controlling the polymerization temperature, the amount of an agent for controlling the molecular weight such as hydrogen, and the like, during the polymerization of the resin (α).

The ratio (molecular weight distribution, Mw/Mn) of the weight average molecular weight (Mw) to the number average molecular weight (Mn) as measured by GPC, of the resin (α), is not particularly limited as long as the effect of the present invention can be obtained. However, the ratio is preferably within the range of from 1.0 to 20.0, more preferably from 1.4 to 15.0, and still more preferably from 1.8 to 10.0.

[Requirement (V)]

The density as measured by the density-gradient tube method in accordance with JIS K7112 is within the range of from 850 to 880 kg/m$^3$. The density is more preferably within the range of from 850 to 877 kg/m$^3$, and particularly preferably from 850 to 874 kg/m$^3$. The density within the above range is preferred, since it allows for reducing the low temperature viscosity.

In the present invention, the lubricating oil composition including the viscosity modifier for lubricating oils which contains the resin (α) exhibit an excellent storage stability under low temperature conditions as well as excellent viscosity characteristics at a low temperature; the present inventors and others consider the reason for this to be as follows. In the lubricating oil composition at a low temperature, the resin (α) forms aggregates in a specific amount of the oil (B), thereby reducing in the flow rate (effective volume). As a result, it is assumed that the lubricating oil composition exhibits excellent viscosity characteristics at a low temperature, in particular. Further, as described above, the aggregates of the resin (α) is less prone to precipitation from the lubricating oil composition and to gelation due to crystallization between the aggregates, due to the resin (α) containing the grafted olefin polymer [R1], and as a result, it is assumed that the lubricating oil composition also exhibits excellent low temperature storage properties.

< Method for Producing Viscosity Modifier for Lubricating Oils >

The viscosity modifier for lubricating oils according to the present invention can be produced by a method including a step of producing the resin (α), by a production method including the following steps (A) and (B).

Step (A): A step of copolymerizing ethylene and at least one α-olefin selected from α-olefins having from 3 to 12 carbon atoms in the presence of an olefin polymerization catalyst including a transition metal compound [A] of a transition metal of Group 4 in the periodic table, to produce an ethylene/α-olefin copolymer having terminal unsaturation.

Step (B): A step of copolymerizing the ethylene/α-olefin copolymer having terminal unsaturation produced in the step (A), ethylene, and at least one α-olefin selected from α-olefins having from 3 to 12 carbon atoms in the presence of an olefin polymerization catalyst including a transition metal compound [B] of a transition metal of Group 4 in the periodic table, to produce the resin (α).

Although the step (B) may be carried out after the completion of the step (A), the step (A) and the step (B) may also be allowed to proceed simultaneously in the same polymerization system.

Further, the transition metal compound [A] of a transition metal of Group 4 in the periodic table, and the transition metal compound [B] of a transition metal of Group 4 in the periodic table may be the same compound. In other words, the olefin polymerization catalyst including the transition metal compound [A] of a transition metal of Group 4 in the periodic table, and the olefin polymerization catalyst including the transition metal compound [B] of a transition metal of Group 4 in the periodic table, may be the same catalyst.

The step (A) and the step (B) will now be described in detail.

The transition metal compound [A] of a transition metal of Group 4 in the periodic table is preferably a transition metal compound [A] of a transition metal of Group 4 in the periodic table, the compound containing a ligand having a dimethylsilylbisindenyl skeleton.

The transition metal compound [B] of a transition metal of Group 4 in the periodic table is preferably a transition metal compound of a transition metal of Group 4 in the periodic table, the compound containing a ligand having a cyclopentadienyl skeleton. The transition metal compound [B] is more preferably a bridged metallocene compound represented by the following general formula [B]:

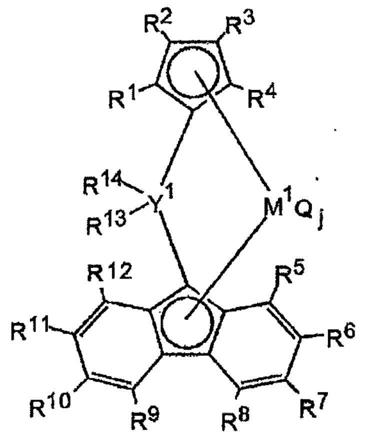

· · · [B]

(wherein in the formula [B],

$R^1$, $R^2$, $R^3$, $R^4$, $R^5$, $R^8$, $R^9$ and $R^{12}$ each independently represents a hydrogen atom, a hydrocarbon group, a silicon-containing group, or a hetero atom-containing group other than silicon-containing groups, and two mutually adjacent groups of the groups represented by $R^1$ to $R^4$ are optionally bound together to form a ring;

$R^6$ and $R^{11}$ are the same atom or the same group selected from hydrogen atom, hydrocarbon groups, silicon-containing groups, and hetero atom-containing groups other than the silicon-containing groups; $R^7$ and $R^{10}$ are the same atom or the same group selected from hydrogen atom, hydrocarbon groups, silicon-containing groups, and hetero atom-containing groups other than the silicon-containing groups; $R^6$ and $R^7$ are optionally bound together to form a ring; and $R^{10}$ and $R^{11}$ are optionally bound together to form a ring; with the proviso that all of $R^6$, $R^7$, $R^{10}$ and $R^{11}$ are not hydrogen atoms;

$R^{13}$ and $R^{14}$ each independently represents an aryl group;

$M^1$ represents a zirconium atom or a hafnium atom;

$Y^1$ represents a carbon atom or a silicon atom;

Q represents a halogen atom, a hydrocarbon group, a halogenated hydrocarbon group, a neutral conjugated or non-conjugated diene having from 4 to 10 carbon atoms, an anionic ligand, or a neutral ligand capable of being coordinated with a lone pair of electrons;

j represents an integer of from 1 to 4; and

in cases where j is an integer of two or more, a plurality of Qs may be the same as or different from each other).

A detailed description regarding the steps (A) and (B) will be given below, in order.

< Step (A) >

The step (A) is a step of producing an ethylene/α-olefin copolymer having terminal unsaturation in the presence of a transition metal compound [A] of a transition metal of Group 4 in the periodic table, and the resulting copolymer serves as the raw material for the one or more side chains of the grafted olefin polymer [R1] described above. The thus produced raw material for the side chains is non-crystalline, and does not have a melting point.

The ethylene/α-olefin copolymer having terminal unsaturation to be produced in the step (A), as used herein, includes an ethylene/α-olefin copolymer having a vinyl group at one end of the polymer chain.

The ethylene/α-olefin copolymer having terminal unsaturation produced in the step (A) includes the ethylene/α-olefin copolymer having a vinyl group at one end usually in an amount of 10% by mass or more, preferably 20% by mass or more, still more preferably 30% by mass or more, and still more preferably 40% by mass or more.

The ethylene/α-olefin copolymer having terminal unsaturation may include, in addition to the ethylene/α-olefin copolymer having a vinyl group at one end, an ethylene/α-olefin copolymer having an unsaturated carbon-carbon bond such as one having a vinylene group or a vinylidene group, and/or an ethylene/α-olefin copolymer having terminal unsaturation at both ends. These polymers are included as they are in the resin (α) to be obtained through the step (B). In the resin (α), these polymers constitute the above described linear polymer along with the ethylene/α-olefin copolymer having a vinyl group at one end which did not contribute to the production of the grafted polymer in the step (B).

Further, among the copolymers produced in the step (A), it is thought that the copolymer having a vinylene group contains an unsaturated carbon-carbon bond at a position close to a terminal of the copolymer. Thus, in the present invention, the copolymers produced in the step (A), including the copolymer having a vinylene group, are collectively referred to as the "ethylene/α-olefin copolymer having terminal unsaturation".

A terminal vinyl ratio (the ratio of the number of vinyl groups with respect to the total number of unsaturated carbon-carbon bonds) in the ethylene/α-olefin copolymer having terminal unsaturation is usually 10% or more, preferably 20%, more preferably 30% or more, and still more preferably 40% or more.

The ratio of terminal vinyl groups per 1,000 carbon atoms in the ethylene/α-olefin copolymer having terminal unsaturation is usually within the range of from 0.1 to 20.0, and preferably from 0.4 to 20. When the terminal vinyl ratio (the ratio of the number of vinyl groups with respect to the total number of unsaturated carbon-carbon bonds) and the ratio of terminal vinyl groups per 1,000 carbon atoms are low, the amount of the ethylene/α-olefin copolymer having terminal unsaturation (specifically, the ethylene/α-olefin copolymer having a vinyl group at one end) to be introduced into the main chain in the subsequent step (B) is reduced, which in turn decreases the amount of the grafted olefin polymer produced, possibly resulting in a failure to obtain desired effects.

The terminal vinyl ratio (the ratio of the number of vinyl groups with respect to the total number of unsaturated carbon-carbon bonds) and the ratio of terminal vinyl groups per 1,000 carbon atoms can be calculated in a conventional manner, through polymer structure analysis by $^1$H-NMR measurement.

The transition metal compound [A] functions as a polymerization catalyst for producing the ethylene/α-olefin copolymer having terminal unsaturation, in combination with a compound [C] to be described later.

Examples of the α-olefin to be used in the step (A) are the same as the specific examples and preferred examples of the α-olefin having from 3 to 12 carbon atoms described above in the requirement (ii) regarding the side chains of the grafted olefin polymer [R1]. However, the α-olefin to be used in the step (A) is particularly preferably propylene.

When propylene is used as the α-olefin to be used in the step (A), the transition metal compound [A] of a

transition metal of Group 4 in the periodic table is preferably a transition metal compound of a transition metal of Group 4 in the periodic table, which compound contains a ligand having a dimethylsilylbisindenyl skeleton.

As the transition metal compound [A] of a transition metal of Group 4 in the periodic table, which compound contains a ligand having a dimethylsilylbisindenyl skeleton, compounds exemplified in Resconi, L. JACS 1992, 114, 1025-1032 and the like are known, and olefin polymerization catalysts for producing a polypropylene having terminal unsaturation can be suitably used.

In addition to the above, as the transition metal compound [A] of a transition metal of Group 4 in the periodic table, which compound contains a ligand having a dimethylsilylbisindenyl skeleton, it is possible to suitably use compounds disclosed in JP H6-100579 A, JP 2001-525461 A, JP 2005-336091 A, JP 2009-299046 A, JP H11-130807 A, JP 2008-285443 A and the like.

More specifically, preferred examples of the transition metal compound [A] of a transition metal of Group 4 in the periodic table, which compound contains a ligand having a dimethylsilylbisindenyl skeleton, include compounds selected from the group consisting of bridged bis(indenyl) zirconocenes and -hafnocenes. The transition metal compound [A] is more preferably dimethylsilyl-bridged bis(indenyl) zirconocene or -hafnocene. Still more preferably, the transition metal compound [A] is dimethylsilyl-bridged bis(indenyl) zirconocene. By selecting a zirconocene as the transition metal compound, the production of a long chain branched polymer, which is formed due to an insertion reaction of the ethylene/α-olefin copolymer having terminal unsaturation, is inhibited, and the viscosity modifier for lubricating oils which contains the resin (α) exhibits desired physical properties.

More specifically, dimethylsilylbis(2-methyl-4-phenylindenyl) zirconium dichloride or dimethylsilylbis(2-methyl-4-phenylindenyl) zirconium dimethyl can be used as a suitable compound.

The polymerization method to be carried out in the step (A) is not particularly limited, and any of gas phase polymerization, slurry polymerization, bulk polymerization, and solution (melt) polymerization methods can be used.

In cases where the step (A) is carried out using a solution polymerization method, examples of polymerization solvents include aliphatic hydrocarbons, aromatic hydrocarbons, and the like. Specific examples thereof include: aliphatic hydrocarbons such as propane, butane, pentane, hexane, heptane, octane, decane, dodecane, and kerosene; alicyclic hydrocarbons such as cyclopentane, cyclohexane, and methylcyclopentane; aromatic hydrocarbons such as benzene, toluene, and xylene; and halogenated hydrocarbons such as ethylene chloride, chlorobenzene, and dichloromethane. These can be used alone or in combination of two or more kinds thereof. Among these, hexane is preferred in terms of reducing the load in the post-treatment process.

The polymerization temperature in the step (A) is usually within the range of from 50°C to 200°C, preferably from 80°C to 150°C, and more preferably from 80°C to 130°C. By properly controlling the polymerization temperature, it is possible to obtain an ethylene/α-olefin copolymer having terminal unsaturation which has a desired molecular weight and stereoregularity.

The polymerization in the step (A) is carried out usually at a polymerization pressure of from normal pressure to 10 MPa gauge pressure, preferably from normal pressure to 5 MPa gauge pressure, and the polymerization reaction can be carried out using any of a batch method, a semi-continuous method, and a continuous method. Among the above mentioned methods, it is preferable for the present invention to employ a method in which monomers are continuously supplied to a reactor to carry out the copolymerization.

The reaction time (average residence time, in cases where the copolymerization is performed by a continuous method) varies depending on the conditions such as catalyst concentration and polymerization temperature, but it is usually from 0.5 minutes to 5 hours, and preferably from 5 minutes to 3 hours.

The polymer concentration in the step (A) is from 5 to 50 wt%, and preferably from 10 to 40 wt%, during the steady state operation. The polymer concentration is preferably from 15 to 50 wt%, in terms of the viscosity limitation corresponding to the polymerization capability, load in the post-treatment (solvent removal) process, and productivity.

The ethylene/α-olefin copolymer having terminal unsaturation to be produced in the step (A) preferably contains the structural units derived from ethylene within the range of from 30 to 65 mol%, more preferably from 35 to 60 mol%, and still more preferably from 40 to 55. When ethylene/α-olefin copolymer having terminal unsaturation contains the structural units derived from ethylene within the above range, an excellent storage stability under low temperature conditions can be obtained.

Further, the weight average molecular weight (Mw) of the ethylene/α-olefin copolymer having terminal unsaturation to be produced in the step (A) as measured by gel permeation chromatography is preferably within the range of from 1,000 to 70,000, more preferably from 3,000 to 50,000, and still more preferably from 5,000 to 40,000. When the weight average molecular weight is within the above mentioned range, the molar concentration of the ethylene/α-olefin copolymer having terminal unsaturation can be increased relative to that of ethylene or of the α-olefin in the step (B) to be described later, thereby increasing the efficiency of introducing the ethylene/α-olefin copolymer having terminal unsaturation into the main chain. On the other hand, when the weight average molecular weight exceeds the above mentioned range, the molar concentration of the ethylene/α-olefin copolymer having terminal unsaturation is relatively decreased, thereby decreasing the introduction efficiency into the main chain. Further, a weight average molecular

weight exceeding the above mentioned range could cause practical problems such as a decrease in the melting point.

The molecular weight distribution (Mw/Mn) of the ethylene/α-olefin copolymer having terminal unsaturation to be produced in the step (A) is from 1.5 to 3.0, and typically from about 1.7 to 2.5. Depending on the case, a mixture of side chains varying in molecular weight may be used.

< Step (B) >

The step (B) is a step of copolymerizing the ethylene/α-olefin copolymer having terminal unsaturation (specifically, the ethylene/α-olefin copolymer having a vinyl group at one end) produced in the step (A), ethylene, and at least one α-olefin selected from α-olefins having from 3 to 12 carbon atoms in the presence of a transition metal compound [B] of a transition metal of Group 4 in the periodic table, to produce the resin (α).

In the step (B), it is important to select a catalyst which exhibits a sufficient activity at a high temperature and a high copolymerizability, and which is capable of producing a high molecular weight copolymer. The terminal structure on the vinyl group side of the vinyl terminated ethylene/α-olefin copolymer sometimes includes a branch (a methyl branch in the case of using propylene as the α-olefin, for example) at the 4-position. In such a case, the copolymer has a sterically bulky structure, making the polymerization of the copolymer more difficult as compared that of a linear vinyl monomer. Further, it is important to carry out the step (B) under high temperature conditions, because it allows for polymerization at a high concentration, and thus enables to secure a higher copolymerization efficiency of the macromonomer and a good productivity. Therefore, the catalyst is required to have a capability to exhibit a sufficient activity at a polymerization temperature of preferably 90°C or more, and to increase the molecular weight of the main chain to a desired level.

In view of the above, to obtain the resin (α) according to the present invention, the transition metal compound [B] of a transition metal of Group 4 in the periodic table to be used in the step (B) is preferably a transition metal compound [B] of a transition metal of Group 4 in the periodic table, which compound has a cyclopentadienyl skeleton, and more preferably a bridged metallocene compound (hereinafter, also referred to as a bridged metallocene compound [B]) represented by the general formula [B] described above.

The bridged metallocene compound [B] functions, in combination with the compound [C] to be described later, as an olefin polymerization catalyst for copolymerizing the ethylene/α-olefin copolymer having terminal unsaturation produced in the step (A), ethylene, and at least one α-olefin selected from α-olefins having from 3 to 12 carbon atoms.

[Compound [B]]

A description will be given below regarding the characteristics of the chemical structure of the bridged metallocene compound [B] which can be used in the present invention.

The bridged metallocene compound [B] has the following structural characteristics [m1] and [m2].

[m1] One of two ligands is a cyclopentadienyl group optionally containing a substituent, and the other is a fluorenyl group containing a substituent (hereinafter, also referred to as a "substituted fluorenyl group").

[m2] The two ligands are bound by an aryl group-containing covalent bond cross-linking site (hereinafter, also referred to as "cross-linking site") comprising a carbon atom or a silicon atom having the aryl group.

The descriptions will now be given in order, regarding the cyclopentadienyl group optionally containing a substituent, the substituted fluorenyl group, and the cross-linking site, included in the bridged metallocene compound [B] ; and other characteristics thereof.

(Cyclopentadienyl Group Optionally Containing Substituent)

In the formula [B], $R^1$, $R^2$, $R^3$ and $R^4$ each independently represents a hydrogen atom, a hydrocarbon group, a silicon-containing group or a hetero atom-containing group other than silicon-containing groups. As a structure for efficiently incorporating the vinyl terminated ethylene/α-olefin copolymer, particularly preferred is a structure in which all of $R^1$, $R^2$, $R^3$ and $R^4$ are hydrogen atoms, or any one or more of $R^1$, $R^2$, $R^3$ and $R^4$ are each a methyl group, with the remaining substituents being each hydrogen atom.

(Substituted Fluorenyl Group)

In the formula [B], $R^5$, $R^8$, $R^9$ and $R^{12}$ each independently represents a hydrogen atom, a hydrocarbon group, a silicon-containing group or a hetero atom-containing group other than silicon-containing groups; and preferred is a hydrogen atom, a hydrocarbon group or a silicon-containing group. $R^6$ and $R^{11}$ are the same atom or the same group

selected from hydrogen atom, hydrocarbon groups, silicon-containing groups, and hetero atom-containing groups other than the silicon-containing groups, and preferred is a hydrogen atom, a hydrocarbon group or a silicon-containing group; $R^7$ and $R^{10}$ are the same atom or the same group selected from hydrogen atom, hydrocarbon groups, silicon-containing groups, and hetero atom-containing groups other than the silicon-containing groups, and preferred is a hydrogen atom, a hydrocarbon group or a silicon-containing group; $R^6$ and $R^7$ are optionally bound together to form a ring; and $R^{10}$ and $R^{11}$ are optionally bound together to form a ring; with the proviso that "all of $R^6$, $R^7$, $R^{10}$ and $R^{11}$ are not hydrogen atoms".

From the viewpoint of the polymerization activity, preferably, neither $R^6$ nor $R^{11}$ is a hydrogen atom; more preferably, none of $R^6$, $R^7$, $R^{10}$ and $R^{11}$ is a hydrogen atom; and particularly preferably, $R^6$ and $R^{11}$ are the same group selected from hydrocarbon groups and silicon-containing groups, and $R^7$ and $R^{10}$ are the same group selected from hydrocarbon groups and silicon-containing groups. Further, it is also preferred that $R^6$ and $R^7$ be bound together to form an alicyclic or an aromatic ring, and that $R^{10}$ and $R^{11}$ be bound together to form an alicyclic or an aromatic ring.

Examples of preferred groups for $R^5$ to $R^{12}$ include: hydrocarbon groups (preferably hydrocarbon groups having from 1 to 20 carbon atoms, hereinafter sometimes referred to as "hydrocarbon groups (f1)"); and silicon-containing groups (preferably silicon-containing groups having from 1 to 20 carbon atoms, hereinafter sometimes referred to as "silicon-containing groups (f2)"). Other examples include hetero atom-containing groups (excluding the silicon-containing groups (f2)) such as halogenated hydrocarbon groups, oxygen-containing groups, and nitrogen-containing groups. Specific examples of the hydrocarbon groups (f1) include linear hydrocarbon groups such as methyl group, ethyl group, n-propyl group, n-butyl group, n-pentyl group, n-hexyl group, n-heptyl group, n-octyl group, n-nonyl group, n-decanyl group, and allyl group; branched hydrocarbon groups such as isopropyl group, isobutyl group, sec-butyl group, t-butyl group, amyl group, 3-methylpentyl group, neopentyl group, 1,1-diethylpropyl group, 1,1-dimethylbutyl group, 1-methyl-1-propylbutyl group, 1,1-propylbutyl group, 1,1-dimethyl-2-methylpropyl group, and 1-methyl-1-isopropyl-2-methylpropyl group; cyclic saturated hydrocarbon groups such as cyclopentyl group, cyclohexyl group, cycloheptyl group, cyclooctyl group, norbornyl group, and adamantyl group; cyclic unsaturated hydrocarbon groups such as phenyl group, naphthyl group, biphenyl group, phenanthryl group, and anthracenyl group, and nucleus alkyl-substituted forms of these groups; and saturated hydrocarbon groups in which at least one hydrogen atom is substituted with an aryl group, such as benzyl group and cumyl group. Preferred silicon-containing groups (f2) for $R^5$ to $R^{12}$ are silicon-containing groups having from 1 to 20 carbon atoms, and examples thereof include silicon-containing groups in which a silicon atom is covalently bound directly to a ring carbon of a cyclopentadienyl group. Specific examples thereof include silicon-containing groups in which an alkylsilyl group (such as trimethylsilyl group) or an arylsilyl group (such as triphenylsilyl group) is bound to a ring carbon of a cyclopentadienyl group.

Specific examples of the hetero atom-containing groups (excluding the silicon-containing groups (f2)) include methoxy group, ethoxy group, phenoxy group, N-methylamino group, trifluoromethyl group, tribromomethyl group, pentafluoroethyl group, and pentafluorophenyl group.

Among the hydrocarbon groups (f1), linear or branched aliphatic hydrocarbon groups having from 1 to 20 carbon atoms are preferred, and specific examples thereof include methyl group, ethyl group, n-propyl group, isopropyl group, n-butyl group, isobutyl group, sec-butyl group, t-butyl group, neopentyl group, n-hexyl group, and the like.

Preferred examples of the substituted fluorenyl group in the case where $R^6$ and $R^7$ ($R^{10}$ and $R^{11}$) are bound together to from an alicyclic or an aromatic ring include groups derived from the compounds represented by the general formulae [II] to [VI] to be described later.

(Cross-Linking Site)

In the formula [B], $R^{13}$ and $R^{14}$ each independently represents an aryl group, and $Y^1$ represents a carbon atom or a silicon atom. An important point in the method for producing the olefin polymer is the fact that the bridging atom $Y^1$ in the cross-linking site has $R^{13}$ and $R^{14}$, which are aryl groups which may be the same as or different from each other. In terms of ease of production, $R^{13}$ and $R^{14}$ are preferably the same.

Examples of the aryl group include phenyl group, naphthyl group, anthracenyl group, and these groups in which one or more aromatic hydrogen atoms (sp2-type hydrogen atoms) are substituted with a substituent. Examples of the substituent include the above mentioned hydrocarbon groups (f1), the silicon-containing groups (f2), halogen atoms and halogenated hydrocarbon groups.

Specific examples of the aryl group include: unsubstituted aryl groups having from 6 to 14 carbon atoms, and preferably from 6 to 10 carbon atoms, such as phenyl group, naphthyl group, anthracenyl group, and biphenyl group; alkyl-substituted aryl groups such as tolyl group, isopropylphenyl group, n-butylphenyl group, t-butylphenyl group, and dimethylphenyl group; cycloalkyl-substituted aryl groups such as cyclohexylphenyl group; halogenated aryl groups such as chlorophenyl group, bromophenyl group, dichlorophenyl group, and dibromophenyl group; and halogenated alkyl-substituted aryl groups such as (trifluoromethyl)phenyl group and bis(trifluoromethyl)phenyl group. The substituents are preferably at the meta and/or the para positions. Among the above mentioned groups, preferred are substituted phenyl groups having substituents at the meta and/or the para positions.

(Other Characteristics of Bridged Metallocene Compound)

In the formula [B], Q represents a halogen atom, a hydrocarbon group, a halogenated hydrocarbon group, a neutral conjugated or non-conjugated diene having from 4 to 10 carbon atoms, an anionic ligand, or a neutral ligand capable of being coordinated with a lone pair of electrons; j represents an integer of from 1 to 4; and in cases where j is an integer of two or more, a plurality of Qs may be the same as or different from each other.

Examples of the hydrocarbon group for Q include linear or branched aliphatic hydrocarbon groups having from 1 to 10 carbon atoms, and alicyclic hydrocarbon groups having from 3 to 10 carbon atoms. Examples of the aliphatic hydrocarbon group include methyl group, ethyl group, n-propyl group, isopropyl group, 2-methylpropyl group, 1,1-dimethylpropyl group, 2,2-dimethylpropyl group, 1,1-diethylpropyl group, 1-ethyl-1-methylpropyl group, 1,1,2,2-tetramethylpropyl group, sec-butyl group, tert-butyl group, 1,1-dimethylbutyl group, 1,1,3-trimethylbutyl group, and neopentyl group. Examples of the alicyclic hydrocarbon group include cyclohexyl group, cyclohexylmethyl group, and 1-methyl-1-cyclohexyl group.

Examples of the halogenated hydrocarbon group for Q include the above mentioned hydrocarbon groups for Q in which at least one hydrogen atom is substituted with a halogen atom.

In the formula [B], $M^1$ represents a zirconium atom or a hafnium atom. Preferred is a hafnium atom, since it allows for copolymerizing the ethylene/$\alpha$-olefin copolymer having terminal unsaturation at a high efficiency, and producing a copolymer having a high molecular weight. To secure a high productivity, it is important to use a catalyst capable of copolymerizing the ethylene/$\alpha$-olefin copolymer having terminal unsaturation at a high efficiency, and producing a copolymer having a high molecular weight. The reason for this is because, although it is desirable to carry out the reaction under high-temperature conditions in order to secure a high productivity, the molecular weight of the resulting polymer tends to decrease under high-temperature conditions.

(Examples of Preferred Bridged Metallocene Compound [B])

Specific examples of the bridged metallocene compound [B] are represented by the formulae [II] to [VI] below. In the compounds to be exemplified below, octamethyloctahydrodibenzofluorenyl refers to a group derived from a compound having a structure represented by the formula [II], octamethyltetrahydrodicyclopentafluorenyl refers to a group derived from a compound having a structure represented by the formula [III], dibenzofluorenyl refers to a group derived from a compound having a structure represented by the formula [IV], 1,1',3,6,8,8'-hexamethyl-2,7-dihydrodicyclopentafluorenyl refers to a group derived from a compound having a structure represented by the formula [V], and 1,3,3',6,6',8-hexamethyl-2,7-dihydrodicyclopentafluorenyl refers to a group derived from a compound having a structure represented by the formula [VI].

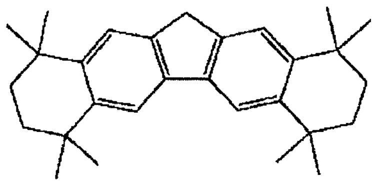

——— [II]

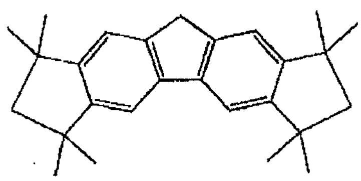

———[III]

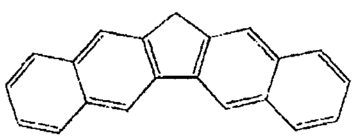

———[IV]

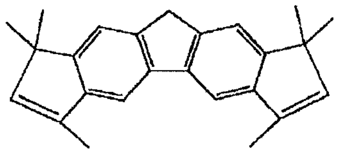

[V]

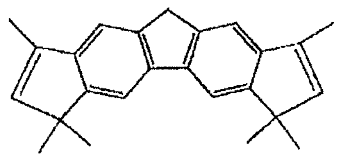

[VI]

Examples of the bridged metallocene compound [B] include:

diphenylmethylene(cyclopentadienyl)(2,7-di-tert-butylfl uorenyl)hafnium dichloride, diphenylmethylene(cyclopentadienyl)(3,6-di-tert-butylfluoreny 1)hafnium dichloride, diphenylmethylene(cyclopentadienyl)(octamethyloctahydrodibenz ofluorenyl)hafnium dichloride, diphenylmethylene(cyclopentadienyl)(octamethyltetrahydrodicyc lopentafluorenyl)hafnium dichloride, diphenylmethylene(cyclopentadienyl)(dibenzofluorenyl)hafnium dichloride, diphenylmethylene(cyclopentadienyl)(1,1',3,6,8,8'-hexamethyl-2,7-dihydrodicyclopentafluorenyl)hafnium dichloride, diphenylmethylene(cyclopentadienyl)(1,3,3',6,6',8-hexamethyl-2,7-dihydrodicyclopentafluorenyl)hafnium dichloride, diphenylmethylene(cyclopentadienyl)(2,7-diphenyl -3,6-di-tert-butylfluorenyl)hafnium dichloride, diphenylmethylene(cyclopentadienyl)(2,7-dimethyl-3,6-di-tert-butylfluorenyl)hafnium dichloride, diphenylmethylene(cyclopentadienyl)(2,7-(trimethylphenyl)-3,6 -di-tert-butylfluorenyl)hafnium dichloride, diphenylmethylene(cyclopentadienyl)(2,7-(dimethylphenyl)-3,6-di-tert-butylfluorenyl)hafnium dichloride, diphenylmethylene(cyclopentadienyl)(2,3,6,7-tetra-tert-butylf luorenyl)hafnium dichloride,
di(p-tolyl)methylene(cyclopentadienyl)(2,7-di-tert-buty lfluorenyl)hafnium dichloride, di(p-tolyl)methylene(cyclopentadienyl)(3,6-di-tert-butylfluor enyl)hafnium dichloride, di(p-tolyl)methylene(cyclopentadienyl)(octamethyloctahydrodib enzofluorenyl)hafnium dichloride, di(p-tolyl)methylene(cyclopentadienyl)(octamethyltetrahydrodi cyclopentafluorenyl)hafnium dichloride, di(p-tolyl)methylene(cyclopentadienyl)(dibenzofluorenyl)hafni um dichloride, di(p-tolyl)methylene(cyclopentadienyl)(1,1',3,6,8,8'-hexameth yl-2,7-dihydrodicyclopentafluorenyl)hafnium dichloride, di(p-tolyl)methylene(cyclopentadienyl)(1,3,3',6,6',8-hexameth yl-2,7-dihydrodicyclopentafluorenyl)hafnium dichloride, di(p-tolyl)methylene(cyclopentadienyl)(2,7-diphenyl -3,6-di-tert-butylfluorenyl)hafnium dichloride, di(p-tolyl)methylene(cyclopentadienyl)(2,7-dimethyl-3,6-di-te rt-butylfluorenyl)hafnium dichloride, di(p-tolyl)methylene(cyclopentadienyl)(2,7-(trimethylphenyl)-3,6-di-tert-butylfluorenyl)hafnium dichloride, di(p-tolyl)methylene(cyclopentadienyl)(2,7-(dimethylphenyl)-3 ,6-di-tert-butylfluorenyl)hafnium dichloride, di(p-tolyl)methylene(cyclopentadienyl)(2,3,6,7-tetramethylflu orenyl)hafnium dichloride, di(p-tolyl)methylene(cyclopentadienyl)(2,3,6,7-tetra-tert-but ylfluorenyl)hafnium dichloride,
di(p-chlorophenyl)methylene(cyclopentadienyl)(2,7-di-te rt-butylfluorenyl)hafnium dichloride, di(p-chlorophenyl)methylene(cyclopentadienyl)(3,6-di-tert-but ylfluorenyl)hafnium dichloride, di(p-chlorophenyl)methylene(cyclopentadienyl)(octamethyloctah ydrodibenzofluorenyl)hafnium dichloride, di(p-chlorophenyl)methylene(cyclopentadienyl)(octamethyltetra hydrodicyclopentafluorenyl)hafnium dichloride, di(p-chlorophenyl)methylene(cyclopentadienyl)(dibenzofluoreny 1)hafnium dichloride, di(p-chlorophenyl)methylene(cyclopentadienyl)(1,1',3,6,8,8'-h examethyl-2,7-dihydrodicyclopentafluorenyl)hafnium dichloride, di(p-chlorophenyl)methylene(cyclopentadienyl)(1,3,3',6,6',8-h examethyl-2,7-dihydrodicyclopentafluorenyl)hafnium dichloride, di(p-chlorophenyl)methylene(cyclopentadienyl)(2,7-diphenyl -3,6-di-tert-butylfluorenyl)hafnium dichloride, di(p-chlorophenyl)methylene(cyclopentadienyl)(2,7-dimethyl-3, 6-di-tert-butylfluorenyl)hafnium dichloride, di(p-chlorophenyl)methylene(cyclopentadienyl)(2,7-(trimethylp henyl)-3,6-di-tert-butylfluorenyl)hafnium dichloride, di(p-chlorophenyl)methylene(cyclopentadienyl)(2,7-(dimethylph enyl)-3,6-di-tert-butylfluorenyl)hafnium dichloride, di(p-chlorophenyl)methylene(cyclopentadienyl)(2,3,6,7-tetra-t ert-butylfluorenyl)hafnium dichloride,
di(m-chlorophenyl)methylene(cyclopentadienyl)(2,7-di-te rt-butylfluorenyl)hafnium dichloride, di(m-chlorophenyl)methylene(cyclopentadienyl)(3,6-di-tert-but ylfluorenyl)hafnium dichloride, di(m-chlorophenyl)methylene(cyclopentadienyl)(octamethyloctah ydrodibenzofluorenyl)hafnium dichloride, di(m-chlorophenyl)methylene(cyclopentadienyl)(octamethyltetra hydrodicyclopentafluorenyl)hafnium dichloride, di(m-chlorophenyl)methylene(cyclopentadienyl)(dibenzofluoreny 1)hafnium dichloride, di(m-chlorophenyl)methylene(cyclopentadienyl)(1,1',3,6,8,8'-h examethyl-2,7-dihydrodicyclopentafluorenyl)hafnium dichloride, di(m-chlorophenyl)methylene(cyclopentadienyl)(1,3,3',6,6',8-h examethyl-2,7-dihydrodicyclopentafluorenyl)hafnium dichloride, di(m-chlorophenyl)methylene(cyclopentadienyl)(2,7-diphenyl -3,6-di-tert-butylfluorenyl)hafnium dichloride, di(m-chlorophenyl)methylene(cyclopentadienyl)(2,7-dimethyl-3, 6-di-tert-butylfluorenyl)hafnium dichloride, di(m-chlorophenyl)methylene(cyclopen-

tadienyl)(2,7-(trimethylphenyl)-3,6-di-tert-butylfluorenyl)hafnium dichloride, di(m-chlorophenyl)methylene(cyclopentadienyl)(2,7-(dimethylphenyl)-3,6-di-tert-butylfluorenyl)hafnium dichloride, di(m-chlorophenyl)methylene(cyclopentadienyl)(2,3,6,7-tetra-tert-butylfluorenyl)hafnium dichloride,

di(p-bromophenyl)methylene(cyclopentadienyl)(2,7-di-tert-butylfluorenyl)hafnium dichloride, di(p-bromophenyl)methylene(cyclopentadienyl)(3,6-di-tert-butylfluorenyl)hafnium dichloride, di(p-bromophenyl)methylene(cyclopentadienyl)(octamethyloctahydrodibenzofluorenyl)hafnium dichloride, di(p-bromophenyl)methylene(cyclopentadienyl)(octamethyltetrahydrodicyclopentafluorenyl)hafnium dichloride, di(p-bromophenyl)methylene(cyclopentadienyl)(dibenzofluorenyl)hafnium dichloride, di(p-bromophenyl)methylene(cyclopentadienyl)(1,1',3,6,8,8'-hexamethyl-2,7-dihydrodicyclopentafluorenyl)hafnium dichloride, di(p-bromophenyl)methylene(cyclopentadienyl)(1,3,3',6,6',8-hexamethyl-2,7-dihydrodicyclopentafluorenyl)hafnium dichloride, di(p-bromophenyl)methylene(cyclopentadienyl)(2,7-diphenyl-3,6-di-tert-butylfluorenyl)hafnium dichloride, di(p-bromophenyl)methylene(cyclopentadienyl)(2,7-dimethyl-3,6-di-tert-butylfluorenyl)hafnium dichloride, di(p-bromophenyl)methylene(cyclopentadienyl)(2,7-(trimethylphenyl)-3,6-di-tert-butylfluorenyl)hafnium dichloride, di(p-bromophenyl)methylene(cyclopentadienyl)(2,7-(dimethylphenyl)-3,6-di-tert-butylfluorenyl)hafnium dichloride, di(p-bromophenyl)methylene(cyclopentadienyl)(2,3,6,7-tetra-tert-butylfluorenyl)hafnium dichloride,

di(m-trifluoromethyl-phenyl)methylene(cyclopentadienyl) (2,7-di-tert-butylfluorenyl)hafnium dichloride, di(m-trifluoromethyl-phenyl)methylene(cyclopentadienyl)(3,6-di-tert-butylfluorenyl)hafnium dichloride, di(m-trifluoromethyl-phenyl)methylene(cyclopentadienyl)(octamethyloctahydrodibenzofluorenyl)hafnium dichloride, di(m-trifluoromethyl-phenyl)methylene(cyclopentadienyl)(octamethyltetrahydrodicyclopentafluorenyl)hafnium dichloride, di(m-trifluoromethyl-phenyl)methylene(cyclopentadienyl)(dibenzofluorenyl)hafnium dichloride, di(m-trifluoromethyl-phenyl)methylene(cyclopentadienyl)(1,1', 3,6,8,8'-hexamethyl-2,7-dihydrodicyclopentafluorenyl)hafnium dichloride, di(m-trifluoromethyl-phenyl)methylene(cyclopentadienyl)(1,3,3',6,6',8-hexamethyl-2,7-dihydrodicyclopentafluorenyl)hafnium dichloride, di(m-trifluoromethyl-phenyl)methylene(cyclopentadienyl)(2,7-diphenyl-3,6-di-tert-butylfluorenyl)hafnium dichloride, di(m-trifluoromethyl-phenyl)methylene(cyclopentadienyl)(2,7-dimethyl-3,6-di-tert-butylfluorenyl)hafnium dichloride, di(m-trifluoromethyl-phenyl)methylene(cyclopentadienyl)(2,7-(trimethylphenyl)-3,6-di-tert-butylfluorenyl)hafnium dichloride, di(m-trifluoromethyl-phenyl)methylene(cyclopentadienyl)(2,7-(dimethylphenyl)-3,6-di-tert-butylfluorenyl)hafnium dichloride, di(m-trifluoromethyl-phenyl)methylene(cyclopentadienyl)(2,3,6,7-tetra-tert-butylfluorenyl)hafnium dichloride,

di(p-trifluoromethyl-phenyl)methylene(cyclopentadienyl) (2,7-di-tert-butylfluorenyl)hafnium dichloride, di(p-trifluoromethyl-phenyl)methylene(cyclopentadienyl)(3,6-di-tert-butylfluorenyl)hafnium dichloride, di(p-trifluoromethyl-phenyl)methylene(cyclopentadienyl)(octamethyloctahydrodibenzofluorenyl)hafnium dichloride, di(p-trifluoromethyl-phenyl)methylene(cyclopentadienyl)(octamethyltetrahydrodicyclopentafluorenyl)hafnium dichloride, di(p-trifluoromethyl-phenyl)methylene(cyclopentadienyl)(dibenzofluorenyl)hafnium dichloride, di(p-trifluoromethyl-phenyl)methylene(cyclopentadienyl)(1,1', 3,6,8,8'-hexamethyl-2,7-dihydrodicyclopentafluorenyl)hafnium dichloride, di(p-trifluoromethyl-phenyl)methylene(cyclopentadienyl) (1,3,3',6,6',8-hexamethyl-2,7-dihydrodicyclopentafluorenyl)hafnium dichloride, di(p-trifluoromethyl-phenyl)methylene(cyclopentadienyl)(2,7-diphenyl-3,6-di-tert-butylfluorenyl)hafnium dichloride, di(p-trifluoromethyl-phenyl)methylene(cyclopentadienyl) (2,7-dimethyl-3,6-di-tert-butylfluorenyl)hafnium dichloride, di(p-trifluoromethyl-phenyl)methylene(cyclopentadienyl)(2,7-(trimethylphenyl)-3,6-di-tert-butylfluorenyl)hafnium dichloride, di(p-trifluoromethyl-phenyl)methylene(cyclopentadienyl) (2,7-(dimethylphenyl)-3,6-di-tert-butylfluorenyl)hafnium dichloride, di(p-trifluoromethyl-phenyl)methylene(cyclopentadienyl) (2,3,6,7-tetra-tert-butylfluorenyl)hafnium dichloride,

di(p-tert-butyl-phenyl)methylene(cyclopentadienyl) (2,7-di-tert-butylfluorenyl)hafnium dichloride, di(p-tert-butyl-phenyl)methylene(cyclopentadienyl) (3,6-di-tert-butylfluorenyl)hafnium dichloride, di(p-tert-butyl-phenyl)methylene(cyclopentadienyl) (octamethyloctahydrodibenzofluorenyl)hafnium dichloride, di (p-tert-butyl-phenyl)methylene(cyclopentadienyl)(octamethyltetrahydrodicyclopentafluorenyl)hafnium dichloride, di(p-tert-butyl-phenyl)methylene(cyclopentadienyl) (dibenzofluorenyl)hafnium dichloride, di(p-tert-butyl-phenyl)methylene(cyclopentadienyl)(1,1',3,6,8,8'-hexamethyl-2,7-dihydrodicyclopentafluorenyl)hafnium dichloride, di(p-tert-butyl-phenyl)methylene(cyclopentadienyl)(1,3,3',6,6',8-hexamethyl-2,7-dihydrodicyclopentafluorenyl)hafnium dichloride, di(p-tert-butyl-phenyl)methylene(cyclopentadienyl)(2,7-diphenyl-3,6-di-tert-butylfluorenyl)hafnium dichloride, di(p-tert-butyl-phenyl)methylene(cyclopentadienyl)(2,7-dimethyl-3,6-di-tert-butylfluorenyl)hafnium dichloride, di(p-tert-butyl-phenyl)methylene(cyclopentadienyl)(2,7-(trimethylphenyl)-3,6-di-tert-butylfluorenyl)hafnium dichloride, di(p-tert-butyl-phenyl)methylene(cyclopentadienyl)(2,7-(dimethylphenyl)-3,6-di-tert-butylfluorenyl)hafnium dichloride, di(p-tert-butyl-phenyl)methylene(cyclopentadienyl)(2,3,6,7-tetra-tert-butylfluorenyl)hafnium dichloride,

di(p-n-butyl-phenyl)methylene(cyclopentadienyl)(2,7-di-tert-butylfluorenyl)hafnium dichloride, di(p-n-butyl-phenyl)methylene(cyclopentadienyl)(3,6-di-tert-butylfluorenyl)hafnium dichloride, di(p-n-butyl-phenyl)methylene(cyclopentadienyl)(octamethyloctahydrodibenzofluorenyl)hafnium dichloride, di(p-n-butyl-phenyl)methylene(cyclopentadienyl)(octamethyltetrahydrodicyclopentafluorenyl)hafnium dichloride, di(p-n-butyl-phenyl)methylene(cyclopentadienyl)(dibenzofluore nyl)hafnium dichloride, di(p-n-butyl-phenyl)methylene(cyclopentadienyl)(1,1',3,6,8,8' -hexamethyl-2,7-dihydrodicyclopentafluorenyl)hafnium dichloride, di(p-n-butyl-phenyl)methylene(cyclopentadienyl)(1,3,3',6,6',8 -hexamethyl-2,7-dihydrodicyclopentafluorenyl)hafnium dichloride, di(p-n-butyl-phenyl)methylene(cyclopentadienyl)(2,7-diphenyl -3,6-di-tert-butylfluorenyl)hafnium dichloride, di(p-n-butyl-phenyl)methylene(cyclopentadienyl)(2,7-dimethyl-3,6-di-tert-butylfluorenyl)hafnium dichloride, di(p-n-butyl-phenyl)methylene(cyclopentadienyl)(2,7-(trimethy lphenyl)-3,6-di-tert-butylfluorenyl)hafnium dichloride, di(p-n-butyl-phenyl)methylene(cyclopentadienyl)(2,7-(dimethyl phenyl)-3,6-di-tert-butylfluorenyl)hafnium dichloride, di(p-n-butyl-phenyl)methylene(cyclopentadienyl)(2,3,6,7-tetra -tert-butylfluorenyl)hafnium dichloride,

di(p-biphenyl)methylene(cyclopentadienyl)(2,7-di-tert-b utylfluorenyl)hafnium dichloride, di(p-biphenyl)methylene(cyclopentadienyl)(3,6-di-tert-butylfl uorenyl)hafnium dichloride, di(p-biphenyl)methylene(cyclopentadienyl)(octamethyloctahydro dibenzofluorenyl)hafnium dichloride, di(p-biphenyl)methylene(cyclopentadienyl)(octamethyltetrahydr odicyclopentafluorenyl)hafnium dichloride, di(p-biphenyl)methylene(cyclopentadienyl)(dibenzofluorenyl)ha fnium dichloride, di(p-biphenyl)methylene(cyclopentadienyl)(1,1',3,6,8,8'-hexam ethyl-2,7-dihydrodicyclopentafluorenyl)hafnium dichloride, di(p-biphenyl)methylene(cyclopentadienyl)(1,3,3',6,6',8-hexam ethyl-2,7-dihydrodicyclopentafluorenyl)hafnium dichloride, di(p-biphenyl)methylene(cyclopentadienyl)(2,7-diphenyl -3,6-di-tert-butylfluorenyl)hafnium dichloride, di(p-biphenyl)methylene(cyclopentadienyl)(2,7-dimethyl-3,6-di -tert-butylfluorenyl)hafnium dichloride, di(p-biphenyl)methylene(cyclopentadienyl)(2,7-(trimethylpheny l)-3,6-di-tert-butylfluorenyl)hafnium dichloride, di(p-biphenyl)methylene(cyclopentadienyl)(2,7-(dimethylphenyl )-3,6-di-tert-butylfluorenyl)hafnium dichloride, di(p-biphenyl)methylene(cyclopentadienyl)(2,3,6,7-tetra-tert-butylfluorenyl)hafnium dichloride,

di(1-naphthyl)methylene(cyclopentadienyl)(2,7-di-tert-b utylfluorenyl)hafnium dichloride, di(1-naphthyl)methylene(cyclopentadienyl)(3,6-di-tert-butylfl uorenyl)hafnium dichloride, di(1-naphthyl)methylene(cyclopentadienyl)(octamethyloctahydro dibenzofluorenyl)hafnium dichloride, di(1-naphthyl)methylene(cyclopentadienyl)(octamethyltetrahydr odicyclopentafluorenyl)hafnium dichloride, di(1-naphthyl)methylene(cyclopentadienyl)(dibenzofluorenyl)ha fnium dichloride, di(1-naphthyl)methylene(cyclopentadienyl)(1,1',3,6,8,8'-hexam ethyl-2,7-dihydrodicyclopentafluorenyl)hafnium dichloride, di(1-naphthyl)methylene(cyclopentadienyl)(1,3,3',6,6',8-hexam ethyl-2,7-dihydrodicyclopentafluorenyl)hafnium dichloride, di(1-naphthyl)methylene(cyclopentadienyl)(2,7-diphenyl -3,6-di-tert-butylfluorenyl)hafnium dichloride, di(1-naphthyl)methylene(cyclopentadienyl)(2,7-dimethyl-3,6-di -tert-butylfluorenyl)hafnium dichloride, di(1-naphthyl)methylene(cyclopentadienyl)(2,7-(trimethylpheny l)-3,6-di-tert-butylfluorenyl)hafnium dichloride, di(1-naphthyl)methylene(cyclopentadienyl)(2,7-(dimethylphenyl )-3,6-di-tert-butylfluorenyl)hafnium dichloride, di(1-naphthyl)methylene(cyclopentadienyl)(2,3,6,7-tetra-tert-butylfluorenyl)hafnium dichloride,

di(2-naphthyl)methylene(cyclopentadienyl)(2,7-di-tert-b utylfluorenyl)hafnium dichloride, di(2-naphthyl)methylene(cyclopentadienyl)(3,6-di-tert-butylfl uorenyl)hafnium dichloride, di(2-naphthyl)methylene(cyclopentadienyl)(octamethyloctahydro dibenzofluorenyl)hafnium dichloride, di(2-naphthyl)methylene(cyclopentadienyl)(octamethyltetrahydr odicyclopentafluorenyl)hafnium dichloride, di(2-naphthyl)methylene(cyclopentadienyl)(dibenzofluorenyl)ha fnium dichloride, di(2-naphthyl)methylene(cyclopentadienyl)(1,1',3,6,8,8'-hexam ethyl-2,7-dihydrodicyclopentafluorenyl)hafnium dichloride, di(2-naphthyl)methylene(cyclopentadienyl)(1,3,3',6,6',8-hexam ethyl-2,7-dihydrodicyclopentafluorenyl)hafnium dichloride, di(2-naphthyl)methylene(cyclopentadienyl)(2,7-diphenyl -3,6-di-tert-butylfluorenyl)hafnium dichloride, di(2-naphthyl)methylene(cyclopentadienyl)(2,7-dimethyl-3,6-di -tert-butylfluorenyl)hafnium dichloride, di(2-naphthyl)methylene(cyclopentadienyl)(2,7-(trimethylpheny l)-3,6-di-tert-butylfluorenyl)hafnium dichloride, di(2-naphthyl)methylene(cyclopentadienyl)(2,7-(dimethylphenyl )-3,6-di-tert-butylfluorenyl)hafnium dichloride, di(2-naphthyl)methylene(cyclopentadienyl)(2,3,6,7-tetra-tert-butylfluorenyl)hafnium dichloride,

di(m-tolyl)methylene(cyclopentadienyl)(2,7-di-tert-buty lfluorenyl)hafnium dichloride, di(m-tolyl)methylene(cyclopentadienyl)(2,7-dimethylfluorenyl) hafnium dichloride, di(m-tolyl)methylene(cyclopentadienyl)(3,6-di-tert-butylfluor enyl)hafnium dichloride,

di(p-isopropylphenyl)methylene(cyclopentadienyl)(octame thyloctahydrodibenzofluorenyl)hafnium dichloride, di(p-isopropylphenyl)methylene(cyclopentadienyl)(octamethyloc tahydrodibenzofluorenyl)hafnium dichloride, di(p-isopropylphenyl)methylene(cyclopentadienyl)(2,7-di-tert-butylfluorenyl)hafnium dichloride, di(p-isopropylphenyl)methylene(cyclopentadienyl)(3,6-di-tert-butylfluorenyl)hafnium dichloride,

diphenylsilylene(cyclopentadienyl)(2,7-di-tert-butylflu orenyl)hafnium dichloride, diphenylsilylene(cyclopentadienyl)(3,6-di-tert-butylfluorenyl )hafnium dichloride, diphenylsilylene(cyclopentadienyl)(octamethyloctahydrodibenzo fluorenyl)hafnium dichloride, diphenylsilylene(cyclopentadienyl)(octamethyltetrahydrodicycl opentafluorenyl)hafnium dichloride, diphenylsilylene(cyclopentadienyl)(dibenzofluorenyl)hafnium dichloride, diphenylsilylene(cyclopentadienyl)(1,1',3,6,8,8'-hexamethyl-2 ,7-dihydrodicyclopentafluorenyl)hafnium dichloride, diphenylsilylene(cyclopentadienyl)(1,3,3',6,6' ,8-hexamethyl-2 ,7-dihydrodicyclopentafluorenyl)hafnium dichloride, diphenylsilylene(cyclopentadienyl)(2,7-diphenyl -3,6-di-tert-butylfluorenyl)hafnium dichloride, diphenylsilylene(cyclopentadienyl)(2,7-dimethyl-3,6-di-tert-b utylfluorenyl)hafnium dichloride, diphenylsilylene(cyclopentadienyl)(2,7-(trimethylphenyl)-3,6-di-tert-butylfluorenyl)hafnium dichloride, diphenylsilylene(cyclopentadienyl)(2,7-(dimethylphenyl)-3,6-d i-tert-butylfluorenyl)hafnium dichloride, and diphenylsilylene(cyclopentadienyl)(2,3,6,7-tetra-tert-butylfl uorenyl)hafnium dichloride.

Examples of the bridged metallocene compound [B] also include: compounds obtained by replacing "dichloride" in the above mentioned compounds with "difluoride", "dibromide", "diiodide", "dimethyl", "methylethyl" or the like; and compounds obtained by replacing "cyclopentadienyl" in the above mentioned compounds with "3-tert-butyl-5-methyl-cyclopentadienyl", "3,5-dimethyl-cyclopentadienyl", "3-tert-butyl-cyclopentadienyl", "3-methyl-cyclopentadienyl" or the like.

The bridged metallocene compound as described above can be produced by a known method, and the production method thereof is not particularly limited. Examples of the known method include the methods described in WO 01/27124 A and WO 04/029062 A, filed by the present inventors.

The bridged metallocene compound [B] as described above is used alone or in combination of two or more kinds thereof.

The step (B) can be carried out by a solution (melt) polymerization, and the polymerization conditions are not particularly limited as long as a solution polymerization process for producing an olefin polymer is used. However, the step (B) preferably includes the following step of obtaining a polymerization reaction solution.

The step of obtaining a polymerization reaction solution is a step of obtaining a polymerization reaction solution of a copolymer of ethylene, an α-olefin(s) having from 3 to 12 carbon atoms, and the ethylene/α-olefin copolymer produced in the step (A), using an aliphatic hydrocarbon as a polymerization solvent, and in the presence of the bridged metallocene compound [B], preferably, in the presence of a metallocene catalyst containing a transition metal compound represented by the general formula [B], wherein $R^{13}$ and $R^{14}$ bound to $Y^1$ are each a phenyl group or a substituted phenyl group substituted with an alkyl group or a halogen group, and $R^7$ and $R^{10}$ each contains an alkyl substituent.

In the step (B), the ethylene/α-olefin copolymer having terminal unsaturation produced in the step (A) is fed to a reactor used in the step (B), in the form of a solution or slurry. The feeding method is not particularly limited, and the polymerization solution obtained in the step (A) may be continuously fed to the reactor in the step (B), or alternatively, the polymerization solution obtained in the step (A) may be stored in a buffer tank once, and then fed to the reactor in the step (B).

Examples of the polymerization solvent to be used in the step (B) include aliphatic hydrocarbons, aromatic hydrocarbons, and the like. Specific examples thereof include: aliphatic hydrocarbons such as propane, butane, pentane, hexane, heptane, octane, decane, dodecane, and kerosene; alicyclic hydrocarbons such as cyclopentane, cyclohexane, and methylcyclopentane; aromatic hydrocarbons such as benzene, toluene, and xylene; and halogenated hydrocarbons such as ethylene chloride, chlorobenzene, and dichloromethane. These can be used alone or in combination of two or more kinds thereof. The polymerization solvent used in the step (B) may be the same as or different from the polymerization solvent used in the step (A) . Among these, aliphatic hydrocarbons such as hexane and heptane are preferred from the industrial point of view. Hexane is more preferred in terms of the separation from the olefin resin (β) and purification.

The polymerization temperature in the step (B) is preferably 90°C or higher, more preferably within the range of from 90°C to 200°C, and still more preferably within the range of from 100°C to 200°C. The temperature within the above range is preferred, because the temperature at which the ethylene/α-olefin copolymer having terminal unsaturation is well dissolved in an aliphatic hydrocarbon such as hexane or heptane, which is preferably used as a polymerization solvent in industrial settings, is 90°C or more. A higher temperature is more preferred in order to increase the amount of side chains introduced. Further, a higher temperature is more preferred, also from the view point of improving the productivity.

The polymerization in the step (B) is carried out usually at a polymerization pressure of from normal pressure to 10 MPa gauge pressure, preferably from normal pressure to 5 MPa gauge pressure, and the polymerization reaction can be carried out using any of a batch method, a semi-continuous method, and a continuous method. It is also possible to carry out the polymerization in two or more divided stages varying in reaction conditions. Among the above mentioned methods, it is preferable for the present invention to employ a method in which monomers are continuously supplied to a reactor to carry out the copolymerization.

The reaction time (average residence time, in cases where the copolymerization is performed by a continuous method) in the step (B) varies depending on the conditions such as catalyst concentration and polymerization temperature, but it is usually from 0.5 minutes to 5 hours, and preferably from 5 minutes to 3 hours.

The polymer concentration in the step (B) is from 5 to 50 wt%, and preferably from 10 to 40 wt%, during the steady state operation. The polymer concentration is preferably from 15 to 35 wt%, in terms of the viscosity limitation corresponding to the polymerization capability, load in the post-treatment (solvent removal) process, and productivity.

The molecular weight of the resulting copolymer can be adjusted by allowing hydrogen to exist in the polymerization system, or by changing the polymerization temperature. It is also possible to adjust the molecular weight by controlling the amount used of the compound [C1] to be described later. Specific examples thereof include triisobutylaluminum, methylaluminoxane, diethylzinc and the like. In the case of adding hydrogen, an adequate amount to be added is about 0.001 to 100 NL per 1 kg of olefin.

[Compound [C]]

In the method for producing the resin (α) according to the present invention, it is preferred to use the compound [C] to be described later, along with the transition metal compound [A] and the bridged metallocene compound [B] used as the olefin polymerization catalysts in the above mentioned steps (A) and (B) .

The compound [C] is a compound which reacts with the transition metal compound [A] and the bridged metallocene compound [B] to serve as an olefin polymerization catalyst. Specifically, the compound [C] is a compound selected from an organometallic compound [C1] , an organoaluminum oxy compound [C2], and a compound [C3] which reacts with the transition metal compound [A] or the bridged metallocene compound [B] to form an ion pair. The compounds [C1] to [C3] will now be described in order.

(Organometallic Compound [C1])

Specific examples of the organometallic compound [C1] to be used in the present invention include an organoaluminum compound, represented by the following general formula (C1-a); an alkylated complex compound of a metal of Group 1 in the periodic table and aluminum, represented by the general formula (C1-b); and a dialkyl compound of a metal of Group 2 or Group 12 in the periodic table, represented by the general formula (C1-c). Note, however, that the organometallic compound [C1] does not include the organoaluminum oxy compound [C2] to be described later.

$$R^a_pAl(OR^b)_qH_rY_s \qquad (C1\text{-}a)$$

(In the general formula (C1-a) above, $R^a$ and $R^b$, which may be the same or different, each represents a hydrocarbon group having from 1 to 15 carbon atoms, and preferably from 1 to 4 carbon atoms; Y represents a halogen atom; and p, q, r, and s are numbers which satisfy the following relations: $0 < p \leq 3$, $0 \leq q < 3$, $0 \leq r < 3$, $0 \leq s < 3$, and $p + q + r + s = 3$.)

$$M^3AlR^c_4 \qquad (C1\text{-}b)$$

(In the general formula (C1-b) above, $M^3$ represents Li, Na or K; and $R^c$ represents a hydrocarbon group having from 1 to 15 carbon atoms, and preferably from 1 to 4 carbon atoms.)

$$R^dR^cM^4 \qquad (C1\text{-}c)$$

(In the general formula (C1-c) above, $R^d$ and $R^e$, which may be the same or different, each represents a hydrocarbon group having from 1 to 15 carbon atoms, and preferably from 1 to 4 carbon atoms; and $M^4$ represents Mg, Zn or Cd.)

Examples of the organoaluminum compound represented by the general formula (C1-a) include compounds represented by the following general formulae (C-1a-1) to (C-1a-4):
an organoaluminum compound represented by:

$$R^a_pAl(OR^b)_{3-p} \qquad (C\text{-}1a\text{-}1)$$

(wherein, $R^a$ and $R^b$, which may be the same or different, each represents a hydrocarbon group having from 1 to 15 carbon atoms, and preferably from 1 to 4 carbon atoms, and p is preferably a number satisfying $1.5 \leq p \leq 3$);
an organoaluminum compound represented by:

$$R^a_pAlY_{3-p} \qquad (C\text{-}1a\text{-}2)$$

(wherein, $R^a$ represents a hydrocarbon group having from 1 to 15 carbon atoms, and preferably from 1 to 4 carbon atoms; Y represents a halogen atom; and p is preferably a number satisfying $0 < p < 3$) ;
an organoaluminum compound represented by:

$$R^a_pAlH_{3-p} \qquad (C\text{-}1a\text{-}3)$$

(wherein, $R^a$ represents a hydrocarbon group having from 1 to 15 carbon atoms, and preferably from 1 to 4 carbon atoms; and p is preferably a number satisfying $2 \leq p < 3$); and
an organoaluminum compound represented by:

$$R^8{}_pAl(OR^b)_qY_s \qquad (C\text{-}1a\text{-}4)$$

(wherein, $R^a$ and $R^b$, which may be the same or different, each represents a hydrocarbon group having from 1 to 15 carbon atoms, and preferably from 1 to 4 carbon atoms; Y represents a halogen atom; and p, q, and s are numbers which satisfy the following relations: $0 < p \leq 3$, $0 \leq q < 3$, $0 \leq s < 3$, and $p + q + s = 3$).

Specific examples of the organoaluminum compound represented by the general formula (C1-a) include: tri-n-alkylaluminums such as trimethylaluminum, triethylaluminum, tri-n-butylaluminum, tripropylaluminum, tripentylaluminum, trihexylaluminum, trioctylaluminum, and tridecyl aluminum; tri-branched alkylaluminums such as triisopropylaluminum, triisobutylaluminum, tri-sec-butylaluminum, tri-tert-butylaluminum, tri-2-methylbutylaluminum, tri-3-methylbutylaluminum, tri-2-methylpentylaluminum, tri-3-methylpentylaluminum, tri-4-methylpentylaluminum, tri-2-methylhexylaluminum, tri-3-methyl hexyl aluminum, and tri-2-ethylhexylaluminum; tricycloalkylaluminums such as tricyclohexylaluminum, and tricyclooctylaluminum; triarylaluminums such as triphenylaluminum, and tritolylaluminum; dialkylaluminum hydrides such as diisobutylaluminum hydride; trialkenylaluminums such as triisoprenylaluminum represented, for example, by $(i\text{-}C_4H_9)_xAl_y(C_5H_{10})_z$ (wherein, x, y, and z are positive numbers, and $z \geq 2x$); alkylaluminum alkoxides such as isobutylaluminum methoxide, isobutylaluminum ethoxide, and isobutylaluminum isopropoxide; dialkylaluminum alkoxides such as dimethylaluminum methoxide, diethylaluminum ethoxide, and dibutylaluminum butoxide; alkylaluminum sesquialkoxides such as ethylaluminum sesquiethoxide, and butylaluminum sesquibutoxide; partially alkoxylated alkylaluminums having an average composition represented by $R^a{}_{2.5}Al(OR^b)_{0.5}$ (wherein, $R^a$ and $R^b$ may be the same or different and each represents a hydrocarbon group having from 1 to 15 carbon atoms, and preferably from 1 to 4 carbon atoms); dialkylaluminum aryloxides such as diethylaluminum phenoxide, diethylaluminum(2,6-di-t-butyl-4-methylphenoxide), ethylaluminumbis(2,6-di-t-butyl-4-methylphenoxide), diisobutylaluminum(2,6-di-t-butyl-4-methylphenoxide), and isobutylaluminumbis(2,6-di-t-butyl-4-methylphenoxide); dialkylaluminum halides such as dimethylaluminum chloride, diethylaluminum chloride, dibutylaluminum chloride, diethylaluminum bromide, and diisobutylaluminum chloride; alkylaluminum sesquihalides such as ethylaluminum sesquichloride, butylaluminum sesquichloride, and ethylaluminum sesquibromide; partially halogenated alkylaluminums such as alkylaluminum dihalides, for example, ethylaluminum dichloride, propylaluminum dichloride, and butylaluminum dibromide; dialkylaluminum hydrides such as diethylaluminum hydride, and dibutylaluminum hydride; other partially hydrogenated alkylaluminums such as alkylaluminum dihydrides, for example, ethylaluminum dihydride, and propylaluminum dihydride; partially alkoxylated and halogenated alkylaluminums such as ethylaluminum ethoxychloride, butylaluminum butoxychloride, and ethylaluminum ethoxybromide; and the like.

Further, a compound similar to the compound represented by the formula (C1-a) can also be used in the present invention, and examples of such a compound include an organoaluminum compound in which two or more aluminum compounds are bound via a nitrogen atom. Specific examples of such a compound include $(C_2H_5)_2AlN(C_2H_5)Al(C_2H_5)_2$.

Examples of the compound represented by the general formula (C1-b) include $LiAl(C_2H_5)_4$, $LiAl(C_7H_{15})_4$, and the like.

Examples of the compound represented by the general formula (C1-c) include dimethylmagnesium, diethylmagnesium, dibutylmagnesium, butylethylmagnesium, dimethylzinc, diethylzinc, diphenylzinc, di-n-propylzinc, diisopropylzinc, di-n-butylzinc, diisobutylzinc, bis(pentafluorophenyl)zinc, dimethylcadmium, diethylcadmium, and the like.

Further, other examples of the organometallic compound [C1] which can be used include methyllithium, ethyllithium, propyllithium, butyllithium, methylmagnesium bromide, methylmagnesium chloride, ethylmagnesium bromide, ethylmagnesium chloride, propylmagnesium bromide, propylmagnesium chloride, butylmagnesium bromide, butylmagnesium chloride, and the like.

Still further, it is also possible to use, as the organometallic compound [C1], a combination of compounds capable of forming the above mentioned organoaluminum compound in the polymerization system, for example, a combination of a halogenated aluminum and an alkyllithium, or a combination of a halogenated aluminum and an alkylmagnesium.

The organometallic compound [C1] as described above is used alone, or in combination of two or more kinds thereof.

(Organoaluminum Oxy Compound [C2])

The organoaluminum oxy compound [C2] to be used in the present invention may be a conventionally known aluminoxane, or a benzene-insoluble organoaluminum oxy compound such as one exemplified in JP H2-78687 A. Specific examples of the organoaluminum oxy compound [C2] include methylaluminoxane, ethylaluminoxane, isobutylaluminoxane and the like.

A conventionally known aluminoxane can be produced, for example, by any of the following methods, and it is usually obtained as a solution in a hydrocarbon solvent.

(1) A method in which an organoaluminum compound such as a trialkylaluminum is added to a hydrocarbon medium suspension of a compound containing adsorbed water or a salt containing water of crystallization, such as, magnesium chloride hydrate, copper sulfate hydrate, aluminum sulfate hydrate, nickel sulfate hydrate or cerous chloride hydrate, to allow the adsorbed water or the water of crystallization to react with the organoaluminum compound.
(2) A method in which water, ice or water vapor is allowed to directly react with an organoaluminum compound such as a trialkylaluminum in a medium such as benzene, toluene, ethyl ether, or tetrahydrofuran.
(3) A method in which an organoaluminum compound such as a trialkylaluminum is allowed to react with an organic tin oxide such as dimethyltin oxide or dibutyltin oxide in a medium such as decane, benzene, or toluene.

The above mentioned aluminoxane may contain a small amount of an organometallic component. Further, after removing the solvent or unreacted organoaluminum compound from the recovered solution of the aluminoxane by distillation, the resulting aluminoxane may be redissolved in a solvent, or suspended in a poor solvent for aluminoxane.
Specific examples of the organoaluminum compound to be used in the production of aluminoxane include the same compounds as those exemplified as the organoaluminum compounds represented by the general formula (C1-a).
Among these, preferred is a trialkylaluminum or a tricycloalkylaluminum, and particularly preferred is trimethylaluminum.
The organoaluminum compound as described above is used alone, or in combination of two or more kinds thereof.
Examples of the solvent to be used in the production of aluminoxane include hydrocarbon solvents including: aromatic hydrocarbons such as benzene, toluene, xylene, cumene, and cymene; aliphatic hydrocarbons such as pentane, hexane, heptane, octane, decane, dodecane, hexadecane, and octadecane; alicyclic hydrocarbons such as cyclopentane, cyclohexane, cyclooctane, and methylcyclopentane; petroleum fractions such as gasoline, kerosene, and gas oil; and halides, particularly, chlorides and bromides, of the above mentioned aromatic hydrocarbons, aliphatic hydrocarbons, and alicyclic hydrocarbons. In addition, ethers such as ethyl ether and tetrahydrofuran can also be used. Of these solvents, particularly preferred is an aromatic hydrocarbon or an aliphatic hydrocarbon.
Further, it is preferred that the benzene-insoluble organoaluminum oxy compound to be used in the present invention contain an Al component soluble in benzene at 60°C in an amount of usually 10% or less, preferably 5% or less, and particularly preferably 2% or less, in terms of Al atom. In other words, the benzene-insoluble organoaluminum oxy compound is preferably insoluble or poorly soluble in benzene.
The organoaluminum oxy compound [C2] to be used in the present invention may also be, for example, an organoaluminum oxy compound containing boron, represented by the following general formula (III):

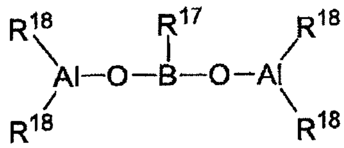 (III)

(wherein in the general formula (III), $R^{17}$ represents a hydrocarbon group having from 1 to 10 carbon atoms; and four $R^{18}$s, which may be the same or different, each represents a hydrogen atom, a halogen atom, or a hydrocarbon group having from 1 to 10 carbon atoms).
The organoaluminum oxy compound containing boron represented by the general formula (III) above can be produced by allowing an alkylboronic acid represented by the following general formula (IV) to react with an organoaluminum compound at a temperature of from -80°C to room temperature for one minute to 24 hours in an inert solvent under an inert gas atmosphere:

$R^{19}$-B(OH)$_2$ (IV)

(wherein in the general formula (IV), $R^{19}$ represents the same group as defined for $R^{17}$ in the general formula (III)).
Specific examples of the alkylboronic acid represented by the general formula (IV) include methylboronic acid, ethylboronic acid, isopropylboronic acid, n-propylboronic acid, n-butylboronic acid, isobutylboronic acid, n-hexylboronic acid, cyclohexylboronic acid, phenylboronic acid, 3,5-difluorophenylboronic acid, pentafluorophenylboronic acid, and 3,5-bis(trifluoromethyl)phenylboronic acid. Among these, preferred are methylboronic acid, n-butylboronic acid, isobutylboronic acid, 3,5-difluorophenylboronic acid, and pentafluorophenylboronic acid. These may be used alone or in combination of two or more kinds thereof.
Specific examples of the organoaluminum compound to be reacted with the alkylboronic acid as described above include the same compounds as those exemplified as the organoaluminum compounds represented by the general formula (C-1a) above.

The organoaluminum compound is preferably a trialkylaluminum or a tricycloalkylaluminum, and particularly preferably, trimethylaluminum, triethylaluminum, or triisobutylaluminum. These may be used alone or in combination of two or more kinds thereof.

The organoaluminum oxy compound [C2] as described above is used alone, or in combination of two or more kinds thereof.

(Compound [C3] which Reacts with Transition Metal Compound [A] or Bridged Metallocene Compound [B] to Form Ion Pair)

Examples of the compound [C3] (hereinafter, referred to as "ionized ionic compound") to be used in the present invention, which reacts with the transition metal compound [A] or the bridged metallocene compound [B] to form an ion pair, include Lewis acids, ionic compounds, borane compounds and carborane compounds described in JP H1-501950 A, JP H1-502036 A, JP H3-179005 A, JP H3-179006 A, JP H3-207703 A, JP H3-207704 A, US 5321106 B; and the like. Further, the compound [C3] may also be, for example, a heteropoly compound or an isopoly compound.

Specific examples of the Lewis acid include compounds represented by $BR_3$ (wherein R represents a phenyl group which optionally contains a substituent such as fluorine, a methyl group, or a trifluoromethyl group; or fluorine), such as trifluoroboron, triphenylboron, tris(4-fluorophenyl)boron, tris(3,5-difluorophenyl)boron, tris(4-fluoromethylphenyl)boron, tris(pentafluorophenyl)boron, tris(p-tolyl)boron, tris(o-tolyl)boron, and tris(3,5-dimethylphenyl)boron.

Examples of the ionic compound include compounds represented by the following general formula (V):

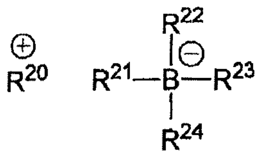

(V)

(wherein in the general formula (V), $R^{20}$ is $H^+$, a carbonium cation, an oxonium cation, an ammonium cation, a phosphonium cation, a cycloheptyltrienyl cation or a ferrocenium cation having a transition metal; and $R^{21}$ to $R^{24}$, which may be the same or different, each represents an organic group, preferably an aryl group or a substituted aryl group).

Specific examples of the carbonium cation include tri-substituted carbonium cations such as triphenylcarbonium cation, tri(methylphenyl)carbonium cation, tri(dimethylphenyl)carbonium cation; and the like.

Specific examples of the ammonium cation include trialkylammonium cations such as trimethylammonium cation, triethylammonium cation, tripropylammonium cation, tributylammonium cation, and tri(n-butyl)ammonium cation; N,N-dialkylanilinium cations such as N,N-dimethylanilinium cation, N,N-diethylanilinium cation, and N,N-2,4,6-pentamethylanilinium cation; dialkylammonium cations such as di(isopropyl)ammonium cation, and dicyclohexylammonium cation; and the like.

Specific examples of the phosphonium cation include triarylphosphonium cations such as triphenylphosphonium cation, tri(methylphenyl)phosphonium cation, tri(dimethylphenyl)phosphonium cation; and the like.

$R^{20}$ is preferably a carbonium cation or an ammonium cation, and particularly preferably, a triphenylcarbonium cation, an N,N-dimethylanilinium cation, or an N,N-diethylanilinium cation.

Examples of the ionic compound include trialkyl-substituted ammonium salts, N,N-dialkylanilinium salts, dialkylammonium salts, triarylphosphonium salts, and the like.

Specific examples of the trialkyl-substituted ammonium salt include triethylammonium tetra(phenyl)boron, tripropylammonium tetra(phenyl)boron, tri(n-butyl)ammonium tetra(phenyl)boron, trimethylammonium tetra(p-tolyl)boron, trimethylammonium tetra(o-tolyl)boron, tri(n-butyl)ammonium tetra(pentafluorophenyl)boron, tripropylammonium tetra(o,p-dimethylphenyl)boron, tri(n-butyl)ammonium tetra(m,m-dimethylphenyl)boron, tri(n-butyl)ammonium tetra(p-trifluoromethylphenyl)boron, tri(n-butyl)ammonium tetra(3,5-ditrifluoromethylphenyl)boron, tri(n-butyl)ammonium tetra(o-tolyl)boron, and the like.

Specific examples of the N,N-dialkylanilinium salt include N,N-dimethylanilinium tetra(phenyl)boron, N,N-diethylanilinium tetra(phenyl)boron, N,N,2,4,6-pentamethylanilinium tetra(phenyl)boron, and the like.

Specific examples of the dialkylammonium salt include di(1-propyl)ammonium tetra(pentafluorophenyl)boron, dicyclohexylammonium tetra(phenyl)boron, and the like.

Further, examples of the ionic compound include triphenylcarbenium tetrakis(pentafluorophenyl)borate, N,N-dimethylanilinium tetrakis(pentafluorophenyl)borate, ferrocenium tetra(pentafluorophenyl)borate, triphenylcarbeniumpentaphenylcyclopentadienyl complex, N,N-diethylaniliniumpentaphenylcyclopentadienyl complex, and boron compounds represented by the following formulae (VI) and (VII):

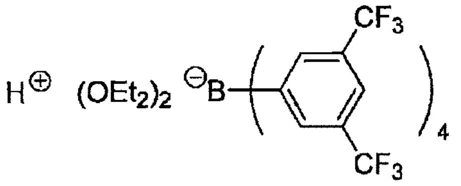 (VI)

(wherein in the formula (VI), Et represents an ethyl group); and

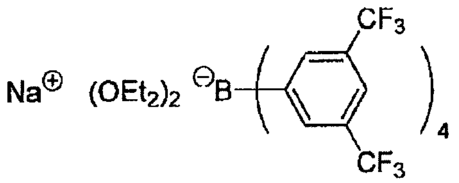 (VII)

(wherein in the formula (VII), Et represents an ethyl group).

Specific examples of the borane compound as an example of the ionized ionic compound (compound [C3]) include: decaborane; salts of anions such as bis [tri (n-butyl) ammonium] nonaborate, bis[tri(n-butyl)ammonium]decaborate, bis[tri(n-butyl)ammonium]undecaborate, bis[tri(n-butyl)ammonium]dodecaborate, bis[tri(n-butyl)ammonium]decachlorodecaborate, and bis[tri(n-butyl)ammonium]dodecachlorododecaborate; salts of metal borane anions such as tri(n-butyl)ammonium bis(dodecahydride dodecaborate)cobaltate (III), and bis[tri(n-butyl)ammonium]bis(dodecahydride dodecaborate)nickelate (III); and the like.

Specific examples of the carborane compound as an example of the ionized ionic compound include: salts of anions such as 4-carbanonaborane, 1,3-dicarbanonaborane, 6,9-dicarbadecaborane, dodecahydride-1-phenyl-1,3-dicarbanonaborane, dodecahydride-1-methyl-1,3-dicarbanonaborane, undecahydride-1,3-dimethyl-1,3-dicarbanonaborane, 7,8-dicarbaundecaborane, 2,7-dicarbaundecaborane, undecahydride-7,8-dimethyl-7,8-dicarbaundecaborane, dodecahydride-11-methyl-2,7-dicarbaundecaborane, tri(n-butyl)ammonium 1-carbadecaborate, tri(n-butyl)ammonium 1-carbaundecaborate, tri(n-butyl)ammonium 1-carbadodecaborate, tri(n-butyl)ammonium 1-trimethylsilyl-1-carbadecaborate, tri(n-butyl)ammoniumbromo-1-carbadodecaborate, tri(n-butyl)ammonium 6-carbadecaborate, tri(n-butyl)ammonium 6-carbaundecaborate, tri(n-butyl)ammonium 7-carbaundecaborate, tri(n-butyl)ammonium 7,8-dicarbaundecaborate, tri(n-butyl)ammonium 2,9-dicarbaundecaborate, tri(n-butyl)ammoniumdodecahydride-8-methyl-7,9-dicarbaundecab orate, tri(n-butyl)ammoniumundecahydride-8-ethyl-7,9-dicarbaundecabo rate, tri(n-butyl)ammoniumundecahydride-8-butyl-7,9-dicarbaundecabo rate, tri(n-butyl)ammoniumundecahydride-8-allyl-7,9-dicarbaundecabo rate, tri(n-butyl)ammoniumundecahydride-9-trimethylsilyl-7,8-dicarb aundecaborate, and tri(n-butyl)ammoniumundecahydride-4,6-dibromo-7-carbaundecabo rate;

salts of metal carborane anions such as tri(n-butyl)ammoniumbis(nonahydride-1,3-dicarbanonaborate)cob altate (III), tri(n-butyl)ammoniumbis(undecahydride-7,8-dicarbaundecaborate )ferrate (III), tri(n-butyl)ammoniumbis(undecahydride-7,8-dicarbaundecaborate )cobaltate (III), tri(n-butyl)ammoniumbis(undecahydride-7,8-dicarbaundecaborate )nickelate (III), tri(n-butyl)ammoniumbis(undecahydride-7,8-dicarbaundecaborate )cuprate (III), tri(n-butyl)ammoniumbis(undecahydride-7,8-dicarbaundecaborate )aurate (III), tri(n-butyl)ammoniumbis(nonahydride-7,8-dimethyl-7,8-dicarbau ndecaborate)ferrate (III), tri(n-butyl)ammoniumbis(nonahydride-7,8-dimethyl-7,8-dicarbau ndecaborate)chromate (III), tri(n-butyl)ammoniumbis(tribromooctahydride-7,8-dicarbaundeca borate)cobaltate (III), tris[tri(n-butyl)ammonium]bis(undecahydride-7-carbaundecabora te)chromate (III), bis[tri(n-butyl)ammonium]bis(undecahydride-7-carbaundecaborat e)manganate (IV), bis[tri(n-butyl)ammonium]bis(undecahydride-7-carbaundecaborat e)cobaltate (III), and bis[tri(n-butyl)ammonium]bis(undecahydride-7-carbaundecaborat e)nickelate (IV); and the like.

The heteropoly compound as an example of the ionized ionic compound is a compound containing an atom selected from silicon, phosphorus, titanium, germanium, arsenic and tin, and one, or two or more kinds of atoms selected from vanadium, niobium, molybdenum and tungsten. Specific examples of the heteropoly compound include phosphovanadic acid, germanovanadic acid, arsenovanadic acid, phosphoniobic acid, germanoniobic acid, siliconomolybdic acid, phosphomolybdic acid, titanomolybdic acid, germanomolybdic acid, arsenomolybdic acid, stannomolybdic acid, phosphotungstic acid, germanotungstic acid, stannotungstic acid, phosphomolybdovanadic acid, phosphotungstovanadic acid, germanotaungstovanadic acid, phosphomolybdotungstovanadic acid, germanomolybdotungstovanadic acid, phosphomolybdotungstic acid, and phosphomolybdoniobic acid; and salts of these acids, but not limited thereto. Further, the above mentioned salts may be, for example, a salt of the above mentioned acid with, for example, a metal of Group 1 or 2 in the periodic table, specifically, a salt with lithium, sodium, potassium, rubidium, cesium, beryllium, magnesium, calcium, strontium, or barium; or an organic salt such as triphenylethyl salt.

The isopoly compound as an example of the ionized ionic compound is a compound composed of ions of one

type of metal atom selected from vanadium, niobium, molybdenum and tungsten, and it can be considered as a molecular ion species of a metal oxide. Specific examples of the isopoly compound include vanadic acid, niobic acid, molybdic acid, tungstic acid, and salts of these acids, but not limited thereto. Further, the above mentioned salts may be, for example, a salt of the above mentioned acid with, for example, a metal of Group 1 or 2 in the periodic table, specifically, a salt with lithium, sodium, potassium, rubidium, cesium, beryllium, magnesium, calcium, strontium, or barium; or an organic salt such as triphenylethyl salt.

The ionized ionic compound (the compound [C3] which reacts with the transition metal compound [A] or the bridged metallocene compound [B] to form an ion pair) as described above is used alone, or in combination of two or more kinds thereof.

When the organoaluminum oxy compound [C2], such as methylaluminoxane as a co-catalyst component, is used in combination, along with the transition metal compound [A] and the bridged metallocene compound [B], a very high polymerization activity for an olefin compound will be exhibited.

The ionized ionic compound [C3] as described above is used alone, or in combination of two or more kinds thereof.

The organometallic compound [C1] is used in such an amount that the molar ratio (C1/M) of the organometallic compound [C1] to the transition metal atoms (M) in the transition metal compound [A], in the step (A); and the molar ratio (C1/M) of the organometallic compound [C1] to the transition metal atoms (M) in the bridged metallocene compound [B], in the step (B) ; are each usually from 0.01 to 100,000, and preferably from 0.05 to 50,000.

The organoaluminum oxy compound [C2] is used in such an amount that the molar ratio (C2/M) of the aluminum atoms in the organoaluminum oxy compound [C2] to the transition metal atoms (M) in the transition metal compound [A], in the step (A); and the molar ratio (C2/M) of the aluminum atoms in the organoaluminum oxy compound [C2] to the transition metal atoms (M) in the bridged metallocene compound [B], in the step (B); are each usually from 10 to 500,000, and preferably from 20 to 100,000.

The ionized ionic compound [C3] is used in such an amount that the molar ratio (C3/M) of the ionized ionic compound [C3] to the transition metal atoms (M) in the transition metal compound [A], in the step (A); and the molar ratio (C2/M) of the ionized ionic compound [C3] to the transition metal atoms (M) (zirconium atoms or hafnium atoms) in the bridged metallocene compound [B], in the step (B); are each usually from 1 to 10, and preferably from 1 to 5.

< Step (C) >

The method for producing the viscosity modifier for lubricating oils according to the present invention may include, as required, a step (C) of recovering the polymer produced in the step (B), in addition to the steps (A) and (B). The step (C) is a step of separating the organic solvents used in steps (A) and (B) to recover the resulting polymer, and shaping the recovered polymer into a product form. The step (C) is not particularly limited as long as it is an existing process of producing a polyolefin resin, including concentration of solvents, extrusion degassing, pelletizing and the like.

< Additive Composition for Lubricating Oils >

The additive composition for lubricating oils according to the present invention contains from 1 to 50 parts by mass of the viscosity modifier for lubricating oils according to the present invention, and from 50 to 99 parts by mass of an oil (B) (with the proviso that the total amount of the viscosity modifier for lubricating oils and the oil (B) is taken as 100 parts by mass) . Preferably, the additive composition for lubricating oils contains from 2 to 40 parts by mass of the viscosity modifier for lubricating oils and from 60 to 98 parts by mass of the oil (B), and more preferably from 3 to 30 parts by mass of the viscosity modifier for lubricating oils and from 70 to 97 parts by mass of the oil (B).

Examples of the oil (B) to be contained in the additive composition for lubricating oils include mineral oils; and synthetic oils such as poly-$\alpha$-olefins, diesters and polyalkylene glycols.

A mineral oil or a blend of a mineral oil and a synthetic oil may be used. Examples of diesters include polyol esters, dioctyl phthalate, dioctyl sebacate, and the like.

Mineral oils are usually subjected to a purification process such as dewaxing before use, and are classified into several grades depending on the method of purification used. In general, a mineral oil having a wax content of from 0.5 to 10% is used. For example, it is also possible to use a highly purified oil produced by hydrocracking refining, composed mainly of isoparaffin, and having a low pour point and a high viscosity index. A mineral oil having a kinematic viscosity at 40°C of from 10 to 200 cSt is generally used.

As described above, mineral oils are usually subjected to a purification process such as dewaxing before use, and are classified into several grades depending on the method of purification used, which grades are defined by API (American Petroleum Institute) classification. The properties of lubricating oil bases which are classified into respective groups are shown in Table 1.

[Table 1]

| Group | Type | Viscosity index *1 | Saturated hydrocarbon content (% by volume) *2 | Sulfur content (% by weight) *3 |
|---|---|---|---|---|
| (i) | Mineral oil | 80 to 120 | <90 | >0.03 |
| (ii) | Mineral oil | 80 to 120 | ≥90 | ≤0.03 |
| (iii) | Mineral oil | ≥120 | ≥90 | ≤0.03 |
| (iv) | Poly-α-olefin | | | |
| (v) | Lubricating oil base other than the above | | | |
| *1: Measured in accordance with ASTM D445 (JIS K2283)<br>*2: Measured in accordance with ASTM D3238<br>*3: Measured in accordance with ASTM D4294 (JIS K2541) | | | | |

The "Poly-α-olefin" in Table 1 represents a group of hydrocarbon polymers obtained by polymerizing at least an α-olefin having 10 or more carbon atoms, as one of the raw material monomers, and examples thereof include polydecenes obtained by polymerizing 1-decene.

The oil (B) to be used in the present invention is preferably an oil belonging to any one of the groups (i) to (iv). In particular, the oil (B) is preferably a mineral oil having a kinematic viscosity at 100°C of from 1 to 50 $mm^2/s$ and a viscosity index of 80 or more; or a poly-α-olefin. Further, the oil (B) is preferably a mineral oil belonging to the group (ii) or the group (iii), or a poly-α-olefin belonging to the group (iv) . Mineral oils in the group (ii) and the group (iii) tend to have a lower wax concentration as compared to those in the group (i). In particular, the oil (B) is preferably a mineral oil having a kinematic viscosity at 100°C of from 1 to 50 $mm^2/s$ and a viscosity index of 80 or more, and belonging to the group (ii) or the group (iii); or a poly-α-olefin belonging to the group (iv).

Further, the additive composition for lubricating oils according to the present invention may contain other components (additives) other than the ethylene/α-olefin copolymer (A) and the oil (B). As the other components, the additive composition may optionally contain any one or more of the materials to be described later, for example.

One of such additives is a detergent. Many of conventional detergents used in the field of engine lubrication provide basicity or TBN to lubricating oils, by the presence of a basic metal compound (a metal hydroxide, a metal oxide or a metal carbonate, which is typically based on a metal such as calcium, magnesium, or sodium) contained therein. Such metallic overbased detergents (also referred to as overbased salts or superbased salts) are generally single phase, homogeneous Newtonian systems characterized by a metal content in excess of that which would be present for neutralization according to the stoichiometry of the metal and the particular acidic organic compound reacted with the metal. The overbased materials are typically prepared by allowing an acidic material (typically, an inorganic acid or lower carboxylic acid, such as carbon dioxide) to react with a mixture of an acidic organic compound (also referred to as a substrate) and a stoichiometric excess of a metal salt, typically in an organic solvent (such as a mineral oil, naphtha, toluene, or xylene) which is inert to the acidic organic substrate. Optionally, a small amount of a promoter such as a phenol or alcohol is contained. The acidic organic substrate will normally have a sufficient number of carbon atoms to provide a certain degree of solubility in oil.

Such conventional overbased materials and methods for preparing these materials are well known to those skilled in the art. Examples of patents describing techniques for producing basic metal salts of sulfonic acids, carboxylic acids, phenols, phosphoric acids, and mixtures of two or more of these include US Patent No. 2,501,731; US Patent No. 2,616,905; US Patent No. 2,616,911; US Patent No. 2,616,925; US Patent No. 2,777,874; US Patent No. 3,256,186; US Patent No. 3,384,585; US Patent No. 3,365,396; US Patent No. 3,320,162; US Patent No. 3,318,809; US Patent No. 3,488,284; and US Patent No. 3,629,109. Salixarate detergents are described in US Patent No. 6, 200, 936 and WO 01/56968. Saligenin detergents are described in US Patent No. 6,310,009.

A typical amount of detergent to be contained in the additive composition for lubricating oils is usually from 1 to 10% by mass, preferably from 1.5 to 9. 0% by mass, and more preferably from 2.0 to 8.0% by mass, but not particularly limited thereto as long as the effect of the present invention can be obtained. The values of the above described amount are all expressed on an oil-free basis (namely, a state where a diluent oil conventionally contained in such a detergent is absent).

Another additive is a dispersant. Dispersants are well known in the field of lubricating oils, and examples thereof include primarily those known as ashless dispersants and polymeric dispersants. Ashless dispersants are characterized by a polar group attached to a hydrocarbon chain having a relatively high molecular weight. Examples of typical ashless dispersants include nitrogen-containing dispersants such as N-substituted long-chain alkenyl succinimides, which are

also known as succinimide dispersants. Succinimide dispersants are more fully described in US Patent No. 4,234,435 and US Patent No. 3,172,892. Another class of ashless dispersants is high molecular weight esters prepared by the reaction of a polyvalent aliphatic alcohol such as glycerol, pentaerythritol or sorbitol with a hydrocarbyl acylating agent. US Patent No. 3,381,022 describes such materials in detail. Still another class of ashless dispersants is Mannich bases. These are materials formed by the condensation of a higher molecular weight alkyl-substituted phenol, an alkylene polyamine, and an aldehyde such as formaldehyde, and are described in more detail in US Patent No. 3,634,515. Examples of other dispersants include additives having polyvalent dispersibility, which are generally hydrocarbon-based polymers that contain polar functionality to impart dispersive properties to the polymer.

Dispersants may be post-treated by allowing them to react with any of a variety of substances. Examples of these substances include urea, thiourea, dimercaptothiadiazoles, carbon disulfide, aldehydes, ketones, carboxylic acids, hydrocarbon-substituted succinic anhydrides, nitriles, epoxides, boron compounds, and phosphorus compounds. References detailing such treatments can be found in US Patent No. 4,654,403. The amount of dispersant to be contained in the composition according to the present invention is not particularly limited as long as the effect of the present invention can be obtained, and the amount may typically be from 1 to 10% by mass, preferably from 1.5 to 9.0% by mass, and more preferably from 2.0 to 8.0% by mass (all values are expressed on an oil-free basis).

Still another component is an antioxidant. Antioxidants encompass phenolic antioxidants, which may include a butyl-substituted phenol containing 2 or 3 t-butyl groups. The para position may be occupied by a hydrocarbyl group or a group bridging two aromatic rings. The antioxidants of the latter type are described in greater detail in US Patent No. 6,559,105. Antioxidants also include aromatic amines such as nonylated diphenylamines. Examples of other antioxidants include sulfurized olefins, titanium compounds, and molybdenum compounds. For example, US Patent No. 4,285,822 discloses lubricating oil compositions containing a molybdenum and sulfur containing composition. Typical amounts of antioxidants will, of course, depend on the specific type and the individual effectiveness of the antioxidants used. Illustratively, the total amount thereof may be from 0.01 to 5% by mass, preferably from 0.15 to 4.5% by mass, and more preferably from 0.2 to 4% by mass. Further, one or more antioxidants may be contained, and certain combinations of these can be synergistic in their combined overall effect.

The additive composition for lubricating oils may also contain a thickener (sometimes referred to as a viscosity index improver or a viscosity modifier). Thickeners are usually polymers, and examples thereof include polyisobutenes, polymethacrylic acid esters, diene polymers, polyalkyl styrenes, esterified styrene-maleic anhydride copolymers, alkenyl arene-conjugated diene copolymers and polyolefins. Multifunctional thickeners which also have dispersibility and/or antioxidative properties are well known, and may optionally be used.

Another additive is an anti-wear agent. Examples anti-wear agents include phosphorus-containing anti-wear/extreme pressure agents, such as metal thiophosphates, phosphoric acid esters and salts thereof, phosphorus-containing carboxylic acids, esters, ethers and amides; and phosphites. In a specific embodiment, a phosphorus anti-wear agent may be contained in an amount to give usually from 0.01 to 0.2% by mass, preferably from 0.015 to 0.15% by mass, more preferably from 0.02 to 0.1% by mass, and still more preferably from 0.025 to 0.08% by mass of phosphorus. However, the amount is not particularly limited as long as the effect of the present invention can be obtained.

The anti-wear agent is a zinc dialkyldithiophosphate (ZDP), in many cases. A typical ZDP may contain 11% by mass of P (calculated on an oil-free basis), and a suitable amount thereof may be, for example, from 0.09 to 0.82% by mass. Examples of anti-wear agents which do not contain phosphorus include boric acid esters (including borated epoxides), dithiocarbamate compounds, molybdenum-containing compounds, and sulfurized olefins.

Examples of other additives which may be optionally contained in the additive composition for lubricating oils include, pour point depressants, friction modifiers, color stabilizers, and anti-foaming agents, in addition to the above described extreme pressure agents and anti-wear agents. These may be used in conventional amounts.

The additive composition for lubricating oils according to the present invention preferably contains the resin ($\alpha$) and the oil (B) in above described ranges. When producing a lubricating oil composition using the additive composition for lubricating oils which contains the resin ($\alpha$) and the oil (B) within the above mentioned ranges, a lubricating oil composition having excellent low temperature properties can be obtained with a low content of the resin ($\alpha$), by mixing the additive composition for lubricating oils with other components of the lubricating oil composition.

Due to containing the oil (B), the additive composition for lubricating oils according to the present invention provides a good workability during the production process of the lubricating oil composition, and can be easily mixed with the other components of the lubricating oil composition.

The additive composition for lubricating oils according to the present invention can be prepared by a conventionally known method, by mixing the resin ($\alpha$) and the oil (B), optionally with other desired components. Since the resin ($\alpha$) is easy to handle, it may optionally be supplied as a concentrate in an oil.

< Lubricating Oil Composition >

The lubricating oil composition according to the present invention contains from 0.1 to 5 parts by mass of the

viscosity modifier for lubricating oils according to the present invention, and from 95 to 99.9 parts by mass of a lubricating oil base (BB) (with the proviso that the total amount of the viscosity modifier for lubricating oils and the lubricating oil base (BB) is taken as 100 parts by mass) . The lubricating oil composition preferably contains the viscosity modifier for lubricating oils at a ratio of from 0.2 to 4 parts by mass, more preferably from 0.4 to 3 parts by mass, and still preferably from 0.6 to 2 parts by mass, and preferably contains the lubricating oil base (BB) at a ratio of from 96 to 99.8 parts by mass, more preferably from 97 to 99.6 parts by mass, and still more preferably from 98 to 99.4 parts by mass, with respect to the total amount described above. The viscosity modifier for lubricating oils may be used alone, or a plurality of these viscosity modifiers can be used in combination.

The lubricating oil composition according to the present invention may further contain a pour point depressant (C). The content of the pour point depressant (C) is usually from 0.05 to 5% by mass, preferably from 0.05 to 3% by mass, more preferably from 0.05 to 2% by mass, and still more preferably from 0.05 to 1% by mass, in 100% by mass of the lubricating oil composition, but not particularly limited thereto as long as the effect of the present invention can be obtained.

When the content of the viscosity modifier for lubricating oils according to the present invention in the lubricating oil composition according to the present invention is within the above mentioned range, the resulting lubricating oil composition has excellent low temperature storage properties and low temperature viscosity, and thus is particularly useful.

Examples of the lubricating oil base (BB) to be contained in the lubricating oil composition include mineral oils; and synthetic oils such as poly-α-olefins, diesters and polyalkylene glycols.

A mineral oil or a blend of a mineral oil and a synthetic oil may be used. Examples of diesters include polyol esters, dioctyl phthalate, dioctyl sebacate, and the like.

Mineral oils are usually subjected to a purification process such as dewaxing before use, and are classified into several grades depending on the method of purification used. In general, a mineral oil having a wax content of from 0.5 to 10% by mass is used. For example, it is also possible to use a highly purified oil produced by hydrocracking refining, composed mainly of isoparaffin, and having a low pour point and a high viscosity index. A mineral oil having a kinematic viscosity at 40°C of from 10 to 200 cSt is generally used.

As described above, mineral oils are usually subjected to a purification process such as dewaxing before use, and are classified into several grades depending on the method of purification used, which grades are defined by API (American Petroleum Institute) classification. The properties of lubricating oil bases which are classified into respective groups are as shown in Table 1 above.

The "Poly-α-olefin" in Table 1 represents a group of hydrocarbon polymers obtained by polymerizing at least one α-olefin having 10 or more carbon atoms as a raw material monomer, and examples thereof include polydecenes obtained by polymerizing 1-decene.

The lubricating oil base (BB) to be used in the present invention may be an oil belonging to any one of the group (i) to the group (iv). In one embodiment, the above described oil is a mineral oil having a kinematic viscosity at 100°C of from 1 to 50 $mm^2/s$ and a viscosity index of 80 or more, or a poly-α-olefin. Further, the lubricating oil base (BB) is preferably a mineral oil belonging to the group (ii) or the group (iii), or a poly-α-olefin belonging to the group (iv). Mineral oils in the group (ii) and the group (iii) tend to have a lower wax concentration as compared to those in the group (i).

In particular, the lubricating oil base (BB) is preferably a mineral oil having a kinematic viscosity at 100°C of from 1 to 50 $mm^2/s$ and a viscosity index of 80 or more, and belonging to the group (ii) or the group (iii); or a poly-α-olefin belonging to the group (iv).

Examples of the pour point depressant (C) which may be contained in the lubricating oil composition include alkylated naphthalene, (co)polymers of alkyl methacrylates, (co)polymers of alkyl acrylates, copolymers of alkyl fumarates and vinyl acetate, α-olefin polymers, and copolymers of α-olefins and styrene. In particular, a (co)polymer of an alkyl methacrylate or a (co)polymer of an alkyl acrylate may be used.

The lubricating oil composition according to the present invention may contain compounding agents (additives), in addition to the above described viscosity modifier for lubricating oils, the above described lubricating oil base (BB) and the pour point depressant (C).

In cases where the lubricating oil composition according to the present invention contains any compounding agents, the content thereof is not particularly limited. However, the content of the compounding agents is usually more than 0% by mass, preferably 1% by mass or more, more preferably 3% by mass or more, and still more preferably 5% by mass or more, with respect to 100% by mass of the total amount of the lubricating oil base (BB) and the compounding agents. At the same time, the content of the compounding agents is usually 40% by mass or less, preferably 30% by mass or less, more preferably 20% by mass or less, and still more preferably 15% by mass or less.

Examples of the compounding agents (additives) include additives which are different from the lubricating oil base (BB) and the pour point depressant (C), such as those described above in detail in the section of the additive composition for lubricating oils. Specific examples include: additives having an effect of improving the viscosity index, such as hydrogenated SBR (styrene butadiene rubbers) and SEBS (styrene-ethylene-butylene-styrene block copolymers); detergents; additives for rust prevention; dispersants; extreme pressure agents; antifoaming agents; antioxidants; metal inactivating agents; and the like.

The lubricating oil composition according to the present invention can be prepared by a conventionally known method, by mixing and dissolving the viscosity modifier for lubricating oils according to the present invention, the lubricating oil base (BB), the pour point depressant (C), and any of other compounding agents (additives), as necessary.

The lubricating oil composition according to the present invention is excellent in low temperature storage properties and low temperature viscosity. Therefore, the lubricating oil composition according to the present invention can be used to lubricate any of various types of known mechanical equipment, for example, as a lubricating oil for gasoline engines, a lubricating oil for diesel engines, a lubricating oil for marine vessel engines, a lubricating oil for two-stroke engines, a lubricating oil for automatic or manual transmissions, a lubricating oil for gears, grease, or the like.

EXAMPLES

The present invention will now be specifically described based on Examples. However, the present invention is in no way limited to these Examples.

In the following Examples and Comparative Examples, the respective physical properties are measured or evaluated according to the following methods.

[DSC Measurement]

The DSC measurement of each of the resins to be produced in Examples and Comparative Examples is carried out using a differential scanning calorimeter (X-DSC7000) manufactured by Seiko Instruments Inc. and corrected with indium standard.

About 10 mg of the above described measurement sample is weighed into a DSC pan made of aluminum. A cover is crimped to the pan and the sample is left in a closed atmosphere, to obtain a sample pan.

The sample pan is disposed in a DSC cell, and an empty aluminum pan is placed as a reference. The temperature of the DSC cell is increased from 30°C (room temperature) to 150° at a rate of 10°C/min under a nitrogen atmosphere (a first heating process).

After maintaining at 150°C for 5 minutes, the temperature is decreased at a rate of 10°C/min to cool the DSC cell to -100°C (cooling process). After maintaining at -100°C for 5 minutes, the temperature is increased at a rate of 10°C/min to heat the DSC cell to 150°C (a second heating process).

The peak top temperature of the melting peak in the enthalpy curve obtained during the second heating process is defined as the melting point (Tm). In cases where two or more melting peaks are observed, the peak top temperature of the highest peak is defined as the TM.

[Intrinsic Viscosity [η] (dL/g)]

The intrinsic viscosity [η] was measured using a decalin solvent at 135°C. Specifically, 20 mg of polymerization powder, pellets or resin block were dissolved in 15 ml of decalin, and the specific viscosity ηsp of the resulting solution was measured in an oil bath at a temperature of 135°C. To the resulting decalin solution, 5 ml of the decalin solvent is further added for dilution, and then the specific viscosity ηsp was measured in the same manner. The above described dilution operation was repeated two more times, and the value of ηsp/C obtained when a concentration (C) was extrapolated to 0 was defined as the intrinsic viscosity (see the following formula).

$$[\eta] = \lim(\eta sp/C) \quad (C \rightarrow 0)$$

[Density]

The density of each of the resins produced or used in Examples and Comparative Examples is measured in accordance with the method described in JIS K7112.

[GPC Measurement]

The weight average molecular weight and the molecular weight distribution of each of the copolymers produced or used in Examples and Comparative Examples are measured according to the following methods.

(Pre-treatment of Sample)

A quantity of 30 mg of each of the copolymers produced or used in Examples and Comparative Examples is dissolved in 20 ml of o-dichlorobenzene at 145°C, and the resulting solution is then filtered through a sintered filter having a pore diameter of 1.0 μm. The resulting filtrate is used as an analysis sample.

(GPC Analysis)

The weight average molecular weight (Mw), the number average molecular weight (Mn), and the molecular weight distribution curve of the analysis sample are determined using gel permeation chromatography (GPC) . The calculations are carried out in terms of polystyrene. The Mw/Mn is calculated from the thus determined weight average molecular weight (Mw) and number average molecular weight (Mn).

(Measuring Apparatus)

Gel permeation chromatograph, HLC-8321, Type GPC/HT (manufactured by Tosoh Corporation)

(Analysis Apparatus)

Data processing software, Empower 2 (registered trademark, manufactured by Waters Corporation)

(Measurement Conditions)

Columns: two TSKgel $GMH_6$-HT columns, and two TSKgel $GMH_6$-HTL columns (each with a diameter of 7.5 mm and a length of 30 cm, manufactured by Tosoh Corporation)

Column temperature: 140°C
Mobile phase: o-dichlorobenzene (containing 0.025% BHT)
Detector: differential refractometer
Flow rate: 1 mL/min
Sample concentration: 0.15% (w/v)
Injection volume: 0.4 mL
Sampling time interval: 1 second
Column calibration: monodisperse polystyrene (manufactured by Tosoh Corporation)
Molecular weight conversion: PS conversion/ standard conversion method (Content of Grafted Olefin Polymer [R1] in Resin (α) ([R1]/(α) (wt%)))

The content of the grafted olefin polymer [R1] in the resin (α) was calculated from the results of the GPC measurement, according to the following method.

The molecular weight distribution curve of the resin (α) obtained by the GPC measurement consisted substantially of two peaks. Of the two peaks, a first peak, namely, the peak on the low molecular weight side, was regarded as the peak attributed to a polymer derived from the ethylene/α-olefin copolymer having terminal unsaturation used in the polymerization step (B), and a second peak, namely, the peak on the high molecular weight side, was regarded as the peak attributed to a polymer derived from the grafted olefin polymer [R1]. The ratio of the peak attributed to a polymer derived from the grafted olefin polymer [R1] (namely, the peak on the high molecular weight side) to the peak attributed to a polymer derived from the resin (α) (namely, the peak of the entire sample) [= the peak attributed to a polymer derived from the grafted olefin polymer [R1] / the peak attributed to a polymer derived from the resin (α)] was defined as the content of the grafted olefin polymer [R1] in the resin (α).

Using the thus obtained value, the content of the main chain in the grafted olefin polymer [R1] was calculated. At this time, the value obtained by subtracting the mass of the ethylene/α-olefin copolymer having terminal unsaturation used in the polymerization step (B) from the mass of the resin (α) obtained in the polymerization step (B) was regarded as a value corresponding to the mass of the main chain.

More specifically, the ratio of the respective peaks in the molecular weight distribution curve was determined, using a molecular weight distribution curve (G1) of the resin (α), and a molecular weight distribution curve (G2) of the ethylene/α-olefin copolymer having terminal unsaturation used in the polymerization step (B), according to the following method. The term "molecular weight distribution curve" as used herein refers to a differential molecular weight distribution curve, and the term "area" mentioned herein with respect to the molecular weight distribution curve, refers the area of a region formed between the molecular weight distribution curve and the base line.

[1] In the numerical data of each of the molecular weight distribution curves (G1) and (G2), the Log (molecular weight) is divided at intervals of 0.02, and the intensity [dwt/d (log molecular weight)] in each of the molecular weight distribution curves (G1) and (G2) is normalized such that the area would be 1.

[2] The intensity of the molecular weight distribution curve (G2) is arbitrarily changed at a certain ratio such that the absolute value of the difference in intensity between the molecular weight distribution curves (G1) and (G2) on the low molecular weight side is 0.0005 or less, thereby preparing a curve (G3).

[3] When the molecular weight at the maximum weight fraction in the molecular weight distribution curve (G1) is defined as the peak top, the portion of the molecular weight distribution curve (G1) which does not overlap with the curve (G3) on the higher molecular weight side relative to the peak top, namely, a peak (P4) [(G1) - (G3)] is defined as the second peak (namely, the above mentioned "peak on the high molecular weight side"). The peak (P4) [(G1) - (G3)] is a portion which appears on the higher molecular weight side from the molecular weight at the maximum weight fraction in the molecular weight distribution curve (G1) in a differential curve (G4), which is generated as a differential curve between the molecular weight distribution curve (G1) and the curve (G3).

[4] The ratio W of the peak attributed to a polymer derived from the grafted olefin polymer [R1] is calculated as follows.

$$W = S(G4)/S(G1)$$

S(G1) and S(G4) represent the areas of the molecular weight distribution curve (G1) and the differential curve (G4), respectively.

[Structural Units Derived from Ethylene]

The amounts of ethylene-derived structural units (% by mole) and α-olefin-derived structural units contained in each of the copolymers produced or used in Examples and Comparative Examples are determined by $^{13}$C-NMR spectral analysis.

(Measuring Apparatus)

AVANCE III 500 CryoProbe Prodigy nuclear magnetic resonance apparatus, manufactured by Bruker BioSpin GmbH.

(Measurement Conditions)

Nucleus measured: $^{13}$C (125 MHz); Measurement mode: single pulse proton broadband decoupling; Pulse width: 45° (5.00 μsec); Number of points: 64 k; Measurement range: 250 ppm (-55 to 195 ppm); Repetition time: 5.5 sec; Number of scans: 512 times; Solvent for measurement: o-dichlorobenzene/benzene-$d_6$ (4/1 v/v); Sample concentration: ca. 60 mg/0.6 mL; Measurement temperature: 120°C; Window function: exponential (BF: 1.0 Hz); and Chemical shift reference: benzene-$d_6$ (128.0 ppm).

[Amount of Terminal Unsaturation and Amount of Terminal Vinyl Groups]

The amount of terminal unsaturation and the amount of terminal vinyl groups in each of the copolymers produced or used in Examples and Comparative Examples are determined by $^1$H-NMR spectral analysis.

(Measuring Apparatus)

Model ECX-400P nuclear magnetic resonance apparatus, manufactured by JEOL Ltd.; Nucleus measured: $^1$H (400 MHz)

(Measurement Conditions)

$^1$H (400MHz), Measurement mode: single pulse; Pulse width: 45° (5.25 μsec); Number of points: 32 k; Measurement range: 20 ppm (-4 to 16 ppm); Repetition time: 5.5 sec; Number of scans: 512 times; Solvent for measurement: 1,1,2,2,-tetrachloroethane-d2; Sample concentration: ca. 60 mg/0.6 mL; Measurement temperature: 120°C; Window function: exponential (BF: 0.12 Hz); and Chemical shift reference: 1,1,2,2,-tetrachloroethane (5.91 ppm).

[Preparation of Mineral Oil-containing Lubricating Oil Composition]

An engine oil (lubricating oil composition) containing the viscosity modifier for lubricating oils obtained in each of Examples and Comparative Examples is prepared. The lubricating oil composition contains the following components:

API group III base oil: from 89.65 to 90.95 (% by weight)
Additive*: 8.15 (% by mass)
Pour point depressant (polymethacrylate): 0.3 (% by mass)
Copolymer: from 0.6 to 1.9 (as shown in Table 4) (% by mass)
Total: 100.0 (% by mass)
Note: *additive = a conventional additive package for engine lubricating oils, including: Ca and Na overbased detergents; N-containing dispersant; aminic and phenolic antioxidants; zinc dialkyldithiophosphate; friction modifier; and antifoaming agent.

[Preparation of Synthetic Oil-containing Lubricating Oil Composition]

API group IV oil (PAO): from 74.58 to 75.89 (% by mass)
API group III base oil: 15.0 (% by mass)
Additive*: 8.15 (% by mass)
Pour point depressant (polymethacrylate): 0.3 (% by mass)
Copolymer: from 0.66 to 1.97 (as shown in Table 4) (% by mass)
Total: 100.0 (% by mass)
Note: *additive = a conventional additive package for engine lubricating oils, including: Ca and Na overbased detergents; N-containing dispersant; aminic and phenolic antioxidants; zinc dialkyldithiophosphate; friction modifier; and antifoaming agent.

To the group III oil, the viscosity modifier for lubricating oils obtained in each of the Examples and Comparative Examples, as a concentrate, is added. The content of the polymer (based on the copolymer, in the absence of a diluent oil) is shown in Table 4.

[Shear Stability Index (SSI)]

The SSI of each of the mineral oil-containing lubricating oil compositions produced in Examples and Comparative Examples is measured by the ultrasonic wave method referencing JPI-5S-29-88. Each of the lubricating oil compositions is irradiated with ultrasonic waves, and the SSI is determined from the rate of decrease in kinematic viscosity before and after the irradiation. The SSI is a measure of a decrease in kinematic viscosity resulting from the breakage of molecular chains when the copolymer components in the lubricating oil are exposed to a shear force under sliding. A higher SSI value indicates a larger decrease in kinematic viscosity.

(Measuring Apparatus)

US-300TCVP ultrasonic wave shear stability tester (manufactured by PrimeTech Ltd.)

(Measurement Conditions)

Oscillatory frequency: 10 KHz
Test temperature: 40°C
Position of irradiation horn: 2 mm below the liquid level

(Measurement Method)

A quantity of 30 ml of sample is collected and placed into a sample container, and the container is then irradiated with ultrasonic waves at an output voltage of 4.2 V for 30 minutes. The kinematic viscosity at 100°C of the sample oil is measured before and after the irradiation of ultrasonic waves, and the SSI is determined according to the formula shown

below:

$$SSI\ (\%) = 100 \times (Vo-Vs)/(Vo-Vb)$$

Vo: kinematic viscosity ($mm^2/s$) at 100°C before ultrasonic irradiation
Vs: kinematic viscosity ($mm^2/s$) at 100°C after ultrasonic irradiation
Vb: kinematic viscosity ($mm^2/s$) at 100°C of the engine oil (lubricating oil composition) in which the component amount of the viscosity modifier for lubricating oils is adjusted to 0% by mass

In general, a lubricating oil composition having a lower SSI value shows a relatively smaller decrease in kinematic viscosity, but tends to have a relatively higher ratio of the viscosity modifier with respect to the blending ratio. On the other hand, a lubricating oil composition having a higher SSI value shows a relatively larger decrease in kinematic viscosity, but tends to have a relatively lower ratio of the viscosity modifier with respect to the blending ratio.
Since the amount of a viscosity modifier used for obtaining a lubricating oil composition has a large impact on the cost of producing the lubricating oil composition, lubricating oil compositions varying in SSI value are produced and are commercially available, in general, so that they can be selected depending on the required level of decrease in kinematic viscosity.
Therefore, when discussing the superiority and inferiority of the fuel saving performance of lubricating oil compositions, it is reasonable to compare between lubricating oil compositions having approximately the same SSI values.

[Kinematic Viscosity (KV)]

The kinematic viscosity at 100°C of each of the lubricating oil compositions prepared in Examples and Comparative Examples is measured in accordance with ASTM D446.

[Cold Cranking Simulator (CCS) Viscosity]

The CCS viscosity (at -30°C) of each of the mineral oil-containing lubricating oil compositions prepared in Examples and Comparative Examples is measured in accordance with ASTM D2602 . The CCS viscosity is used to evaluate the slidability (startability) of a crank shaft at a low temperature. A lower value indicates a better low temperature viscosity (low temperature properties) of the lubricating oil.
When lubricating oil compositions are produced at compositions adjusted to achieve approximately the same kinematic viscosity at 100°C, and compared between the lubricating oil compositions having approximately the same SSI, a lubricating oil composition with a lower CCS viscosity has a better fuel saving performance at a low temperature (low temperature startability) .

[Mini-Rotary Viscosity (MRV, MR viscosity)]

The MR viscosity (at -40°C) of each of the synthetic oil-containing lubricating oil compositions prepared in Examples and Comparative Examples is measured in accordance with ASTM D4648.
When lubricating oil compositions are produced at compositions adjusted to achieve approximately the same kinematic viscosity at 100°C, and compared between the lubricating oil compositions, a lubricating oil composition with a lower MR viscosity has better oil pumping properties at a low temperature.

[Low Temperature Storage Stability Test and Evaluation of Degree of Phase Separation]

The low temperature storage properties of each of the lubricating oil compositions produced in Examples and Comparative Examples are evaluated.
The above mentioned test involves subjecting the above described engine oils to a four-week refrigerating cycle in which the temperature is controlled to vary within the range of from -18 to 0°C. The above mentioned temperature cycle has been found to promote rapid nucleation and growth of crystals which accelerate the gelation process.
All the lubricating oil compositions (details will be described later) prepared in Examples and Comparative Examples are evaluated using this method. At the end of the above described four-week cycle, the engine oils are observed, and the results are each represented by a number from 1 to 5.
1 (No phase separation is observed)
2 (A small degree of phase separation is observed)
3 (A slightly small degree of phase separation is observed)
4 (A slightly large degree of phase separation is observed)
5 (A large degree of phase separation is observed) These results are also shown in Table 4.

The olefin resins (α) of the Examples and Comparative Examples will now be described. Note, however, that there are cases where polymerization is performed for a plurality of times in order to secure sufficient amounts of resins required for the analysis and the evaluation of the lubricating oil modifiers.

[Example 1]

Step (A) : Production of Ethylene/α-olefin Copolymer Having Terminal Unsaturation (M-1)

Dimethylsilyl bis(2-methyl-4-phenylindenyl)zirconium dichloride, used as a catalyst, was synthesized according to the method disclosed in JP 3737134 B.

To a sufficiently nitrogen-substituted glass reactor with a capacity of 2 L, 1.0 L of toluene was introduced, followed by heating to 85°C. To the resultant, ethylene and propylene were continuously supplied at rates of 129 liter/hr and 109 liter/hr, respectively, while stirring the interior of the polymerization reactor at 600 rpm, thereby saturating the liquid phase and the gas phase. While continuing to supply ethylene and propylene, 0.83 mL of a toluene solution (aluminum atom concentration: 1.5 mol/L) of methylaluminoxane (also referred to as PMAO), and then 4.0 mL (0.008 mmol) of a toluene solution (0.0020 mol/L) of dimethylsilylbis(2-methyl-4-phenylindenyl)zirconium dichloride were added to the reactor, and polymerization was carried out at 85°C for 5 minutes under normal pressure. The polymerization was terminated by adding a small amount of isobutanol. The resulting polymerization reaction solution was washed with dilute hydrochloric acid, and the organic layer obtained by liquid separation was concentrated. Further, the resulting concentrate was dried under reduced pressure at 80°C for 10 hours, to obtain 22.5 g of an ethylene/α-olefin copolymer having terminal unsaturation (M-1). The analysis results of the thus obtained polymer are shown in Table 2.

Step (B): Production of Ethylene/α-olefin Copolymer (α-1)

A compound (1) represented by the following formula, used as a catalyst, was synthesized by a known method.

To a sufficiently nitrogen-substituted glass reactor with a capacity of 0.5 L, 12.0 g of the ethylene/α-olefin copolymer having terminal unsaturation (M-1) and 250 ml of xylene were introduced. The reactor was then heated to 90°C, and the ethylene/α-olefin copolymer (M-1) was homogeneously dissolved while stirring the interior of the polymerization reactor at 200 rpm. To the resultant, ethylene and propylene were continuously supplied at rates of 100 liter/hr and 16.8 liter/hr, respectively, while stirring the interior of the polymerization reactor at 600 rpm, to saturate the liquid phase and the gas phase. While continuing to supply ethylene and propylene, 6.0 mL (6.0 mmol) of a decane solution (1.0 mol/L) of triisobutylaluminum (also referred to as $iBu_3Al$), 7.5 mL (0.015 mmol) of a toluene solution (0.0020 mol/L) of the compound (1), and then 15.0 mL (0.06 mmol) of a toluene solution (4.0 mmol/L) of triphenylcarbenium tetrakis(pentafluorophenyl)borate (also referred to as $Ph_3CB(C_6F_5)_4$) were added, and polymerization was carried out at 90°C for 20 minutes under normal pressure. The polymerization was terminated by adding a small amount of isobutanol. The resulting polymerization reaction solution was washed with dilute hydrochloric acid, and the organic layer obtained by liquid separation was concentrated. In order to remove catalyst residue components, the thus obtained concentrate was diluted with xylene, and the resultant was brought into contact with 20 g of an ion exchange resin (Amberlyst MSPS2-1 DRY, manufactured by Dow Chemical Company). After removing the ion exchange resin by filtration, the resulting solution was concentrated again, followed by drying at 120°C for 3 hours under reduced pressure, to obtain 20.6 g of an olefin resin (α-1). The analysis results of the olefin resin (α-1) are shown in Table 3. The thus obtained olefin resin (α-1) was evaluated as a viscosity modifier for lubricating oils, and the results are shown in Table 4.

Subsequently, the polymerization was carried out in the same manner as in Example 1 except that the ethylene/α-olefin copolymer having terminal unsaturation (M-1) was not added, to obtain a resin (α'-1). The resulting resin (α'-1) was then analyzed by the methods previously described, and the results are shown in Table 3. The thus obtained olefin resin (α'-1) was defined as a copolymer constituting the main chain of the olefin resin (α-1), and of the following olefin resin (α-2), olefin resin (α-3), and olefin resin (α-4).

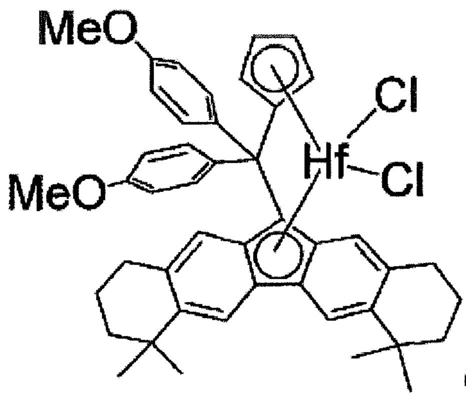

Compound (1)

[Example 2]

The same procedure as in Example 1 was carried out except that the charged amount of the ethylene/α-olefin copolymer having terminal unsaturation (M-1) was changed to 48.0 g in the step (B), to produce an olefin resin. A quantity of 54.5 g of the olefin resin (α-2) was obtained. The analysis results of the olefin resin (α-2) are shown in Table 3. The thus obtained olefin resin (α-2) was evaluated as a viscosity modifier for lubricating oils, and the results are shown in Table 4.

[Example 3]

Step (A) : Production of Ethylene/α-olefin Copolymer Having Terminal Unsaturation (M-2)

To a sufficiently nitrogen-substituted glass reactor with a capacity of 2 L, 1.0 L of toluene was introduced, followed by heating to 100°C. To the resultant, ethylene and propylene were continuously supplied at rates of 129 liter/hr and 109 liter/hr, respectively, while stirring the interior of the polymerization reactor at 600 rpm, thereby saturating the liquid phase and the gas phase. While continuing to supply ethylene and propylene, 2.0 mL of a toluene solution (aluminum atom concentration: 1.5 mol/L) of methylaluminoxane (also referred to as PMAO), and then 3.0 mL (0.030 mmol) of a toluene solution (0.010 mol/L) of dimethylsilylbis (2-methyl-4-phenylindenyl) zirconium dichloride were added to the reactor, and polymerization was carried out at 100°C for 5 minutes under normal pressure. The polymerization was terminated by adding a small amount of isobutanol. The resulting polymerization reaction solution was washed with dilute hydrochloric acid, and the organic layer obtained by liquid separation was concentrated. Further, the resulting concentrate was dried under reduced pressure at 80°C for 10 hours, to obtain 12.4 g of an ethylene/α-olefin copolymer having terminal unsaturation (M-2). The analysis results of the thus obtained polymer are shown in Table 2.

Step (B): Production of Ethylene/α-olefin Copolymer (α-3)

The same procedure as in Example 1 was carried out except that 3.0 g of the ethylene/α-olefin copolymer having terminal unsaturation (M-2) was used instead of the ethylene/α-olefin copolymer having terminal unsaturation (M-1) in the step (B), to produce an olefin resin. A quantity of 13.6 g of the olefin resin (α-3) was obtained. The analysis results of the olefin resin (α-3) are shown in Table 3. The thus obtained olefin resin (α-3) was evaluated as a viscosity modifier for lubricating oils, and the results are shown in Table 4.

[Example 4]

The same procedure as in Example 3 was carried out except that the charged amount of the ethylene/α-olefin copolymer having terminal unsaturation (M-2) was changed to 12.0 g in the step (B), to produce an olefin resin. A quantity of 23.4 g of the olefin resin (α-4) was obtained. The analysis results of the olefin resin (α-4) are shown in Table 3. The thus obtained olefin resin (α-4) was evaluated as a viscosity modifier for lubricating oils, and the results are shown in Table 4.

[Comparative Example 1]

The olefin resin (α'-1) and the ethylene/α-olefin copolymer having terminal unsaturation (M-1) were blended to a weight ratio of 42/58, and the resultant was evaluated as a viscosity modifier for lubricating oils. The results are

shown in Table 4. In other words, in Comparative Example 1, the ethylene/α-olefin copolymer having terminal unsaturation (M-1) was used at the same ratio as that used in the production of the olefin resin (α-1) in Example 1. However, the resulting resin does not contain the grafted olefin polymer [R1], differing from the resin produced in Example 1.

[Comparative Example 2]

The olefin resin (α'-1) and the ethylene/α-olefin copolymer having terminal unsaturation (M-1) were blended to a weight ratio of 12/88, and the resultant was evaluated as a viscosity modifier for lubricating oils. The analysis results are shown in Table 4. In other words, in Comparative Example 2, the ethylene/α-olefin copolymer having terminal unsaturation (M-1) was used at the same ratio as that used in the production of the olefin resin (α-2) in Example 2. However, the resulting resin does not contain the grafted olefin polymer [R1], differing from the resin produced in Example 2.

[Comparative Example 3]

The olefin resin (α'-1) and the ethylene/α-olefin copolymer having terminal unsaturation (M-2) were blended to a weight ratio of 78/22, and the resultant was evaluated as a viscosity modifier for lubricating oils. The analysis results are shown in Table 4. In other words, in Comparative Example 3, the ethylene/α-olefin copolymer having terminal unsaturation (M-2) was used at the same ratio as that used in the production of the olefin resin (α-3) in Example 3. However, the resulting resin does not contain the grafted olefin polymer [R1], differing from the resin produced in Example 3.

[Comparative Example 4]

The olefin resin (α'-1) and the ethylene/α-olefin copolymer having terminal unsaturation (M-2) were blended to a weight ratio of 49/51, and the resultant was evaluated as a viscosity modifier for lubricating oils. The analysis results are shown in Table 4. In other words, in Comparative Example 4, the ethylene/α-olefin copolymer having terminal unsaturation (M-2) was used at the same ratio as that used in the production of the olefin resin (α-4) in Example 4. However, the resulting resin does not contain the grafted olefin polymer [R1], differing from the resin produced in Example 4.

[Comparative Example 5]

An ethylene/propylene copolymer (EPR-1) produced in Comparative Example 6 to be described later and an ethylene/propylene copolymer (EPR-2) produced in Comparative Example 8 to be described later were blended to a weight ratio of 30/70, and the resultant was evaluated as a viscosity modifier for lubricating oils. The analysis results are shown in Table 4.

[Comparative Example 6]

The ethylene/propylene copolymer (EPR-1) was obtained by the following method.

To one of the feed ports of a pressurized continuous polymerization reactor equipped with a stirring blade and having a capacity of 136 L, which had been sufficiently substituted with nitrogen, dehydrated and purified n-hexane was supplied at a flow rate of 21.0 L/hour; and a hexane solution of methylaluminoxane (MMAO-3A; manufactured by Tosoh Finechem Corporation) prepared at a concentration of 2.0 mmol/L, a hexane solution of [dimethyl (t-butylamide) (tetramethyl-$\eta^5$-cyclopentadienyl)silan e] titanium dichloride prepared at a concentration of 0.3 mmol/L, and a hexane solution of triphenylcarbenium tetrakis(pentafluorophenyl)borate prepared at a concentration of 0.05 mmol/L were supplied continuously at flow rates of 5.0 L/hour, 0.15 L/hour, and 1.0 L/hour, respectively (6.15 L/hour in total) . Simultaneously, to another feed port of the continuous polymerization reactor, ethylene was supplied at a flow rate of 6.1 kg/hour, propylene was supplied at a flow rate of 5.6 kg/ hour, and hydrogen was supplied at a flow rate 40 NL/hour, continuously. Subsequently, continuous solution polymerization is performed under conditions of a polymerization temperature of 120°C, a total pressure of 3.4 MPa-G (G = gauge pressure), and a stirring rotation speed of 256 rpm. A coolant is allowed to flow into a jacket provided on the outer periphery of the polymerization reactor. Further, a separately provided gas blower is used to forcibly circulate the gas phase portion, followed by cooling the gas phase by a heat exchanger, to remove the heat generated by the polymerization reaction.

The resulting hexane solution containing the ethylene/propylene copolymer produced by performing the polymerization under the above described conditions, was continuously discharged, as the ethylene/propylene copolymer, thorough a discharge port provided at the lowermost portion of the polymerization reactor at a rate of 6.5 kg/hour, such

that the average amount of solution within the polymerization reactor is maintained at 30 L. The resulting polymerization solution was introduced into a large amount of methanol, to allow the ethylene/propylene copolymer to precipitate. Thereafter, the ethylene/propylene copolymer is dried under reduced pressure at 130°C for 24 hours.

The analysis results of the thus obtained ethylene/propylene copolymer (EPR-1) are shown in Table 3, and the evaluation results of the copolymer as a viscosity modifier for lubricating oils are shown in Table 4.

[Comparative Example 7]

The olefin resin (α'-1) described in Example 1 was used, and the evaluation results thereof as a viscosity modifier for lubricating oils are shown in Table 4.

[Comparative Example 8]

The ethylene/propylene copolymer (EPR-2) was produced according to the method described in Polymerization Example 6 in WO 2000/60032, except that the charged amount of hydrogen was changed from 90 mL to 200 mL, and the polymerization time was changed from 5 minutes to 4 minutes. The analysis results of the thus obtained polymer are shown in Table 3, and the evaluation results thereof as a viscosity modifier for lubricating oils are shown in Table 4.

[Comparative Example 9]

An ethylene/propylene copolymer (EPR-3) was obtained in the same manner as in Comparative Example 8, except that the charged amount of hydrogen was changed from 200 mL to 150 mL. The analysis results of the thus obtained polymer are shown in Table 3, and the evaluation results thereof as a viscosity modifier for lubricating oils are shown in Table 4.

[Comparison between Examples and Comparative Examples, and Description of Drawings]

FIG. 1 shows a diagram obtained by plotting the CCS viscosity (at -30°C) against the degree of phase separation, of the mineral oil-containing lubricating oils prepared in Examples and Comparative Examples. It can be seen that the mineral oil-containing lubricating oils of Examples are markedly superior in the degree of phase separation as compared to the mineral oil-containing lubricating oils of Comparative Examples.

FIG. 2 shows a diagram obtained by plotting the MR viscosity (at -40°C) against the degree of phase separation, of the synthetic oil-containing lubricating oils prepared in Examples and Comparative Examples. It can be seen that the synthetic oil-containing lubricating oils of Examples are superior in the balance between the degree of phase separation and the MR viscosity as compared to the synthetic oil-containing lubricating oils of Comparative Examples.

[Table 2]

| Ethylene/α-olefin copolymer having terminal unsaturation | M-1 | M-2 |
|---|---|---|
| Amount of terminal unsaturation (number of unsaturated groups/1,000 carbon atoms) | 1.77 | 3.73 |
| Amount of Terminal Vinyl Groups (number of vinyl groups/1,000 carbon atoms) | 0.67 | 2.12 |
| Weight average molecular weight (g/mol) | 39,000 | 13,000 |
| Mw/Mn | 2.3 | 3.0 |
| Repeating units derived from ethylene (mol%) | 44 | 44 |
| Tm (°C) | Not detected | Not detected |
| Intrinsic viscosity [η] (dl/g) | 0.40 | 0.14 |

[Table 3]

| | Example 1 | Example 2 | Example 3 | Example 4 | Comparative Example 6 | Comparative Example 7 | Comparative Example 8 | Comparative Example 9 |
|---|---|---|---|---|---|---|---|---|
| | α-1 | α-2 | α-3 | α-4 | EPR-1 | α'-1 | EPR-2 | EPR-3 |
| Copolymer constituting main chain | α'-1 | α'-1 | α'-1 | α'-1 | - | - | - | - |
| Ethylene/α-olefin copolymer having terminal unsaturation | M-1 | M-1 | M-2 | M-2 | - | - | - | - |
| Repeating units derived from ethylene (mol%) | 58 | 48 | 71 | 59 | 79 | 79 | 55 | 52 |
| Tm (°C) | 31 | 8 | 36 | 28 | 28 | 26 | Not detected | Not detected |
| Intrinsic viscosity [η] (dl/g) | 0.85 | 0.80 | 0.86 | 0.67 | 0.80 | 1.10 | 1.27 | 1.65 |
| Density ($kg/m^3$) | 868 | 853 | 859 | 854 | 863 | 889 | 852 | 852 |
| Weight average molecular weight | 112,000 | 186,000 | 89,000 | 84,000 | 80,000 | 110,000 | 143,000 | 215000 |
| Mw/Mn | 3.6 | 7.9 | 5.6 | 8.8 | 2.2 | 2.1 | 2.0 | 2.2 |
| [R1]/(α) [wt%] | 56 | 41 | 82 | 60 | - | - | - | - |
| Main chain/[R1] [wt%] | 74 | 29 | 95 | 81 | - | - | - | - |

[Table 4]

| | | Example 1 | Example 2 | Example 3 | Example 4 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|---|---|
| Viscosity modifier | Composition (parts by mass) | α-1 | α-2 | α-3 | α-4 | α'-1 | α'-1 | α'-1 | α'-1 | EPR-1 | EPR-1 | α'-1 | EPR-2 | EPR-3 |
| | | 100 | 100 | 100 | 100 | 42 | 12 | 78 | 49 | 30 | 100 | 100 | 100 | 100 |
| | | | | | | M-1 | M-1 | M-2 | M-2 | EPR-2 | | | | |
| | | | | | | 58 | 88 | 22 | 51 | 70 | | | | |
| Mineral oil-containing lubricating oil | Added amount of viscosity modifier [Wt%] | 1.14 | 1.28 | 1.16 | 1.50 | 1.30 | 1.89 | 1.05 | 1.41 | 0.86 | 1.15 | 0.85 | 0.78 | 0.61 |
| | Kinematic viscosity at 100°C [$mm^2$/S] | 9.90 | 9.95 | 10.04 | 9.87 | 9.90 | 9.94 | 9.86 | 9.60 | 9.86 | 9.84 | 9.96 | 9.80 | 9.97 |
| | SSI[%] | 21 | 27 | 16 | 20 | 16 | 10 | 21 | 20 | 25 | 8 | 20 | 29 | 44 |
| | CCS viscosity at -30°C [mPa·s] | 4,310 | 4,620 | 3,990 | 4,380 | 4,540 | 5,290 | 3,910 | 4,160 | 4,360 | 3,920 | 3780 | 4310 | 4160 |
| | Degree of phase separation | 2 | 1 | 2 | 2 | 4 | 3 | 5 | 5 | 3 | 5 | 5 | 3 | 3 |

(continued)

| | | Example 1 | Example 2 | Example 3 | Example 4 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|---|---|
| Synthetic oil-containing lubricating oil | Added amount of viscosity modifier [wt%] | 1.23 | 1.38 | 1.22 | 1.55 | 1.37 | 1.97 | 1.13 | 1.60 | 0.92 | 1.18 | 0.93 | 0.86 | 0.66 |
| | Kinematic viscosity at 100°C [$mm^2/S$] | 9.96 | 9.82 | 10.03 | 9.71 | 9.73 | 9.88 | 10.05 | 10.02 | 9.87 | 9.88 | 10.15 | 9.88 | 9.78 |
| | MR viscosity at -40°C [mPa·s] | 10,500 | 11,900 | 9,100 | 10,600 | 10,400 | 14,000 | 8,570 | 9,150 | 12,700 | 8,380 | 8360 | 14000 | 13500 |
| | Degree of phase separation | 3 | 2 | 3 | 1 | 5 | 1 | 5 | 5 | 2 | 5 | 5 | 1 | 1 |

Industrial Applicability

The viscosity modifier for lubricating oils and the additive composition for lubricating oils according to the present invention can be suitably used to obtain a lubricating oil composition excellent in storage stability under low temperature conditions as well as in viscosity characteristics at a low temperature. The lubricating oil composition according to the present invention has excellent low temperature storage properties and low temperature viscosity, and it can be used, for example, as a lubricating oil for gasoline engines, a lubricating oil for diesel engines, a lubricating oil for marine vessel engines, a lubricating oil for two-stroke engines, a lubricating oil for automatic or manual transmissions, a lubricating oil for gears, grease, or the like.

## Claims

1. A viscosity modifier for lubricating oils, comprising a resin ($\alpha$), wherein the resin ($\alpha$) satisfies the following requirements (I) and (II), and comprises a grafted olefin polymer [R1] which is composed of a main chain and a side chain (s) and which satisfies the following requirements (i) and (ii):

    (i) the main chain is composed of a copolymer of ethylene and at least one $\alpha$-olefin selected from $\alpha$-olefins having from 3 to 12 carbon atoms, and comprises structural units derived from the ethylene within the range of from 74 to 86 mol%; and
    (ii) the side chain(s) is/are composed of a copolymer of ethylene and at least one $\alpha$-olefin selected from $\alpha$-olefins having from 3 to 12 carbon atoms, and comprise(s) the structural units derived from ethylene within the range of from 30 to 65 mol%;

        (I) the melting point (Tm) as measured by differential scanning calorimetry (DSC) is within the range of from -20 to 100°C; and
        (II) the intrinsic viscosity [$\eta$] as measured in decalin at 135°C is within the range of from 0.5 to 2.5 dl/g.

2. The viscosity modifier for lubricating oils according to claim 1, wherein the resin ($\alpha$) further satisfies the following requirement (III):

    (III) the ratio of the structural units derived from ethylene with respect to the total structural units is within the range of from 40 to 85 mol%, and the ratio of structural units derived from the $\alpha$-olefin having from 3 to 12 carbon atoms with respect to the total structural units is within the range of from 15 to 60 mol% (with the proviso that the total amount of the structural units derived from ethylene and the structural units derived from the $\alpha$-olefin having from 3 to 12 carbon atoms is taken as 100 mol%).

3. The viscosity modifier for lubricating oils according to claim 1 or 2, wherein the resin ($\alpha$) is composed of the structural units derived from ethylene and structural units derived from propylene.

4. The viscosity modifier for lubricating oils according to any one of claims 1 to 3, wherein the resin ($\alpha$) has a density as measured by the density-gradient tube method in accordance with JIS K7112 within the range of from 850 to 880 kg/$m^3$.

5. The viscosity modifier for lubricating oils according to any one of claims 1 to 4, wherein the grafted olefin polymer [R1] further satisfies the following requirement (iii):

    (iii) the main chain is derived from an ethylene/$\alpha$-olefin copolymer having a weight average molecular weight within the range of from 70,000 to 400,000.

6. The viscosity modifier for lubricating oils according to any one of claims 1 to 5, wherein the grafted olefin polymer [R1] further satisfies the following requirement (iv):

    (iv) the side chain(s) is/are derived from an ethylene/$\alpha$-olefin copolymer having a weight average molecular weight (Mw) within the range of from 1,000 to 70,000.

7. A method for producing the viscosity modifier for lubricating oils according to any one of claims 1 to 6, the method comprising the following steps (A) and (B):

(A) copolymerizing ethylene and at least one α-olefin selected from α-olefins having from 3 to 12 carbon atoms in the presence of an olefin polymerization catalyst comprising a transition metal compound [A] of a transition metal of Group 4 in the periodic table, to produce an ethylene/α-olefin copolymer having terminal unsaturation; and

(B) copolymerizing the ethylene/α-olefin copolymer having terminal unsaturation produced in the step (A), ethylene, and at least one α-olefin selected from α-olefins having from 3 to 12 carbon atoms in the presence of an olefin polymerization catalyst comprising a transition metal compound [B] of a transition metal of Group 4 in the periodic table, to produce the resin (α).

**8.** The method for producing the viscosity modifier for lubricating oils, according to claim 7, wherein the ethylene/α-olefin copolymer having terminal unsaturation produced in the step (A) comprises the structural units derived from ethylene within the range of from 30 to 65 mol%, and has a weight average molecular weight (Mw) as measured by gel permeation chromatography within the range of from 1,000 to 70,000.

**9.** The method for producing the viscosity modifier for lubricating oils, according to claim 7 or 8, wherein the transition metal compound [A] of a transition metal of Group 4 in the periodic table is a transition metal compound of a transition metal of Group 4 in the periodic table, the compound comprising a ligand having a dimethylsilylbisindenyl skeleton.

**10.** The method for producing the viscosity modifier for lubricating oils, according to any one of claims 7 to 9, wherein the transition metal compound [B] of a transition metal of Group 4 in the periodic table is a bridged metallocene compound represented by the following general formula [B]:

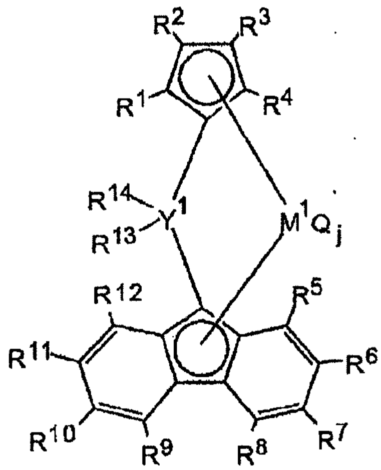

· · · [B]

(wherein in the formula [B],

$R^1$, $R^2$, $R^3$, $R^4$, $R^5$, $R^8$, $R^9$ and $R^{12}$ each independently represents a hydrogen atom, a hydrocarbon group, a silicon-containing group, or a hetero atom-containing group other than silicon-containing groups, and two mutually adjacent groups of the groups represented by $R^1$ to $R^4$ are optionally bound together to form a ring;

$R^6$ and $R^{11}$ are the same atom or the same group selected from hydrogen atom, hydrocarbon groups, silicon-containing groups, and hetero atom-containing groups other than the silicon-containing groups; $R^7$ and $R^{10}$ are the same atom or the same group selected from hydrogen atom, hydrocarbon groups, silicon-containing groups, and hetero atom-containing groups other than the silicon-containing groups; $R^6$ and $R^7$ are optionally bound together to form a ring; and $R^{10}$ and $R^{11}$ are optionally bound together to form a ring; with the proviso that all of $R^6$, $R^7$, $R^{10}$ and $R^{11}$ are not hydrogen atoms;

$R^{13}$ and $R^{14}$ each independently represents an aryl group;

$Y^1$ represents a carbon atom or a silicon atom;

$M^1$ represents a zirconium atom or a hafnium atom;

Q represents a halogen atom, a hydrocarbon group, a halogenated hydrocarbon group, a neutral conjugated or non-conjugated diene having from 4 to 10 carbon atoms, an anionic ligand, or a neutral ligand capable of being coordinated with a lone pair of electrons;

j represents an integer of from 1 to 4; and

in cases where j is an integer of two or more, a plurality of Qs may be the same as or different from each other).

11. The method for producing the viscosity modifier for lubricating oils, according to any one of claims 7 to 10, wherein the step (B) is a solution polymerization process carried out at a polymerization temperature of 90°C or more.

12. An additive composition for lubricating oils, comprising from 1 to 50 parts by mass of the viscosity modifier for lubricating oils according to any one of claims 1 to 6, and from 50 to 99 parts by mass of an oil (B) (with the proviso that the total amount of the viscosity modifier for lubricating oils and the oil (B) is taken as 100 parts by mass).

13. A lubricating oil composition comprising from 0.1 to 5 parts by mass of the viscosity modifier for lubricating oils according to any one of claims 1 to 6, and from 95 to 99.9 parts by mass of a lubricating oil base (BB) (with the proviso that the total amount of the viscosity modifier for lubricating oils and the lubricating oil base (BB) is taken as 100 parts by mass).

14. The lubricating oil composition according to claim 13, further comprising from 0.05 to 5% by mass of a pour point depressant (C) in 100% by mass of the lubricating oil composition.

15. The lubricating oil composition according to claim 13 or 14, wherein the lubricating oil base (BB) is a mineral oil.

16. The lubricating oil composition according to claim 13 or 14, wherein the lubricating oil base (BB) is a synthetic oil.

FIG. 1

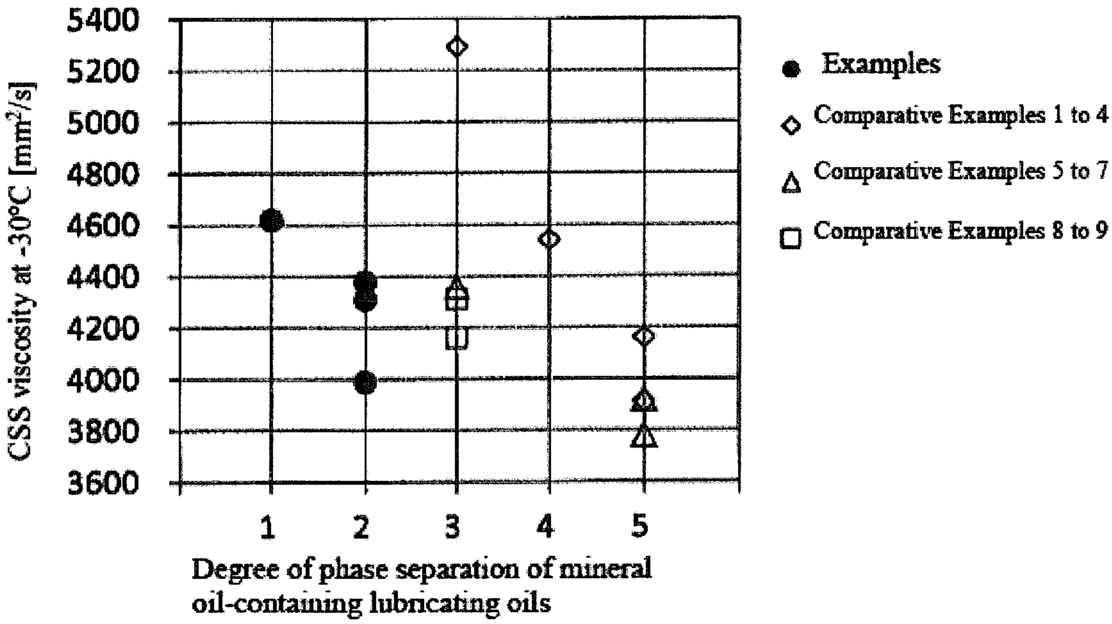

5400
5200
5000
4800
4600
4400
4200
4000
3800
3600
CSS viscosity at -30°C [mm²/s]
1
2
3
4
5
Degree of phase separation of mineral oil-containing lubricating oils
Examples
Comparative Examples 1 to 4
Comparative Examples 5 to 7
Comparative Examples 8 to 9


FIG. 2

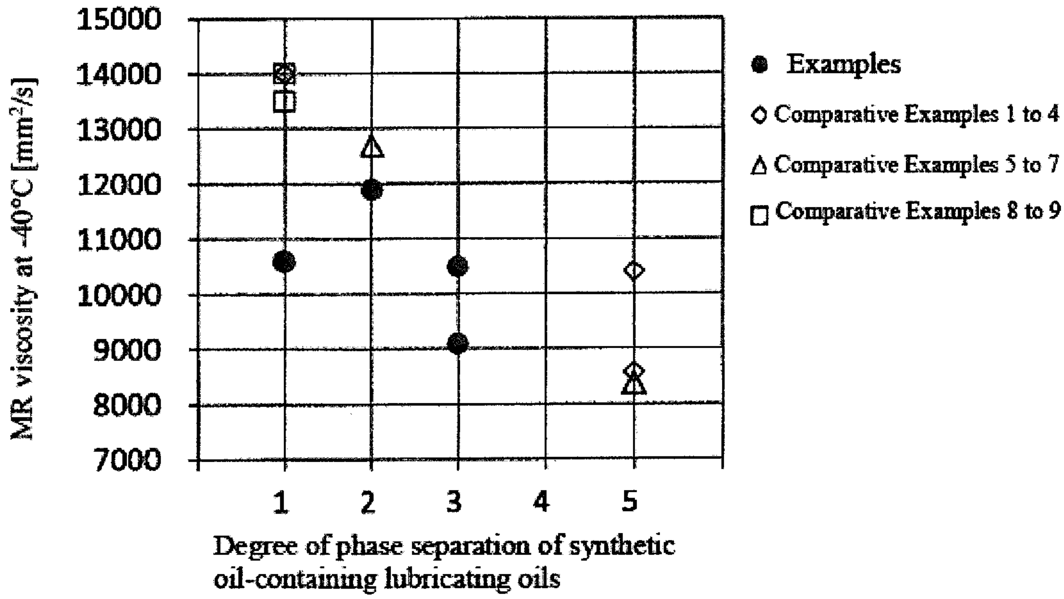

15000
14000
13000
12000
11000
10000
9000
8000
7000
MR viscosity at -40°C [mm²/s]
1
2
3
4
5
Degree of phase separation of synthetic oil-containing lubricating oils
Examples
Comparative Examples 1 to 4
Comparative Examples 5 to 7
Comparative Examples 8 to 9

## INTERNATIONAL SEARCH REPORT

International application No.
PCT/JP2016/082911

A. CLASSIFICATION OF SUBJECT MATTER
*C10M143/00*(2006.01)i, *C08F255/04*(2006.01)i, *C10M143/04*(2006.01)i, *C10N20/00* (2006.01)n, *C10N20/02*(2006.01)n, *C10N20/04*(2006.01)n, *C10N30/00*(2006.01)n, *C10N30/02*(2006.01)n, *C10N40/04*(2006.01)n, *C10N40/25*(2006.01)n,

B. FIELDS SEARCHED

Minimum documentation searched (classification system followed by classification symbols)
C10M101/00-177/00, C10N10/00-80/00, C08F255/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2009/101936 A1 (Mitsui Chemicals, Inc.), 20 August 2009 (20.08.2009), claims; paragraphs [0001], [0014] to [0016], [0024] to [0026], [0063], [0065], [0068], [0072] to [0092], [0149] to [0150], [0153], [0155]; examples & US 2009/0209721 A1 claims; paragraphs [0001], [0015] to [0017], [0036] to [0038], [0074], [0076], [0079], [0083] to [0103], [0157] to [0159], [0162], [0164]; examples & EP 2243795 A1 | 1-16 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 December 2016 (12.12.16) | 17 January 2017 (17.01.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

INTERNATIONAL SEARCH REPORT

International application No. PCT/JP2016/082911

C (Continuation). DOCUMENTS CONSIDERED TO BE RELEVANT

| Category* | Citation of document, with indication, where appropriate, of the relevant passages | Relevant to claim No. |
|---|---|---|
| A | WO 03/038017 A1 (Mitsui Chemicals, Inc.), 08 May 2003 (08.05.2003), page 8, the last line to page 9, line 4 & US 2004/0058830 A1 paragraph [0052] & EP 1441023 A1 & KR 10-0518425 B1 & CN 1494582 A | 1-16 |
| A | WO 98/033872 A1 (Mitsui Chemicals, Inc.), 06 August 1998 (06.08.1998), page 14, lines 18 to 21 & US 6214779 B1 page 7, lines 51 to 55 & EP 902081 A1 & CN 1216060 A & KR 10-0432537 B | 1-16 |
| A | JP 7-150181 A (Mitsui Petrochemical Industries, Ltd.), 13 June 1995 (13.06.1995), paragraph [0011] (Family: none) | 1-16 |
| A | JP 2012-172013 A (Mitsui Chemicals, Inc.), 10 September 2012 (10.09.2012), claims; paragraph [0040] (Family: none) | 1-16 |
| A | WO 2008/047878 A1 (Mitsui Chemicals, Inc.), 24 April 2008 (24.04.2008), claims; examples & US 2008/0125561 A1 claims; examples & EP 2075268 A1 | 1-16 |
| A | JP 2003-048931 A (Mitsui Chemicals, Inc.), 21 February 2003 (21.02.2003), claims; examples & US 2003/0073785 A1 claims; examples & EP 1262498 A2 | 1-16 |
| A | JP 2002-507225 A (Exxon Chemical Patents Inc.), 05 March 2002 (05.03.2002), claims; examples & US 6110880 A claims; examples & EP 994908 A1 & CA 2289540 A & KR 10-2001-0014149 A | 1-16 |

Form PCT/ISA/210 (continuation of second sheet) (January 2015)

**INTERNATIONAL SEARCH REPORT**

International application No.
PCT/JP2016/082911

Continuation of A. CLASSIFICATION OF SUBJECT MATTER
(International Patent Classification (IPC))

*C10N40/26*(2006.01)n, *C10N50/10*(2006.01)n

(According to International Patent Classification (IPC) or to both national classification and IPC)

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2000060032 A
- WO 2000034420 A
- JP 2003105365 A
- WO 2008047878 A
- JP H6100579 A
- JP 2001525461 A
- JP 2005336091 A
- JP 2009299046 A
- JP H11130807 A
- JP 2008285443 A
- WO 0127124 A
- WO 04029062 A
- JP H278687 A
- JP H1501950 A
- JP H1502036 A
- JP H3179005 A
- JP H3179006 A
- JP H3207703 A
- JP H3207704 A
- US 5321106 B
- US 2501731 A
- US 2616905 A
- US 2616911 A
- US 2616925 A
- US 2777874 A
- US 3256186 A
- US 3384585 A
- US 3365396 A
- US 3320162 A
- US 3318809 A
- US 3488284 A
- US 3629109 A
- US 6200936 B
- WO 0156968 A
- US 6310009 B
- US 4234435 A
- US 3172892 A
- US 3381022 A
- US 3634515 A
- US 4654403 A
- US 6559105 B
- US 4285822 A
- JP 3737134 B
- WO 200060032 A


### Non-patent literature cited in the description


- Polymer Analysis Handbook. Kinokuniya Co., Ltd, 12 January 1995
- **RESCONI, L.** *JACS,* 1992, vol. 114, 1025-1032